# EUROPEAN PATENT APPLICATION

(11) **EP 4 401 461 A1**
(43) Date of publication of application: **17.07.2024**
(21) Application number: 22863583.5
(22) Date of filing: 01.09.2022
(51) Int. Cl.: H04W 28/02

(54) **QUALITY OF SERVICE FEATURE PARAMETER DETERMINATION METHOD AND APPARATUS, DATA SENDING METHOD AND APPARATUS, AND DEVICE**

(30) Priority: 06.09.2021 CN 202111039127
(71) Applicant: Vivo Mobile Communication Co., Ltd., Dongguan, Guangdong 523863 (CN)
(72) Inventor: LI, Jianzhi, Dongguan, Guangdong 523863 (CN); JIANG, Dajie, Dongguan, Guangdong 523863 (CN)
(74) Representative: Lavoix
(86) International application number: PCT/CN2022/116518
(87) International publication number: WO 2023/030448

(57) **Abstract**

This application discloses a quality of service characteristic parameter determining method, a data sending method, an apparatus, and a device, and belongs to the field of communication technologies. The quality of service characteristic parameter determining method in embodiments of this application includes: determining, by a sending device, a quality of service QoS characteristic parameter, where the sensing QoS characteristic parameter includes at least one of the following: a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

## Description

### CROSS-REFERENCE TO RELATED APPLICATIONS

This application claims priority to Chinese Patent Application No. 202111039127.0, filed on September 6, 2021 in China, which is incorporated herein by reference in its entirety.

### TECHNICAL FIELD

This application belongs to the communication field, and in particular, relates to a quality of service characteristic parameter determining method, a data sending method, an apparatus, and a device.

### BACKGROUND

In addition to having a communication capability, a future mobile communication system such as a beyond fifth generation (Beyond 5th Generation, B5G) communication system or a sixth generation (6th Generation, 6G) further has a sensing capability. One or more devices with the sensing capability can perceive information such as a direction, a distance, and a speed of a target object by sending and receiving a wireless signal, or detect, track, identify, and image a target object, an event, an environment, and the like. In the future, with deployment of a small base station with a capability of a high frequency band and high bandwidth such as millimeter wave and terahertz in the 6G network, sensing resolution is significantly improved compared with a centimeter wave, so that the 6G network can provide a more precise sensing service.

Purposes of sensing are mainly divided into two categories. The first category of purpose is that sensing is used to assist or enhance communication performance, for example, a base station tracks a moving track of a device to provide a more accurate beamforming alignment device. The other category of purpose is sensing that is not directly related to communication. For example, the base station monitors a weather condition by using a wireless signal, and a mobile phone recognizes a gesture of a user through millimeter wave wireless sensing.

However, because there are many types of sensing services, and currently there is no clear definition of a quality of service (Quality of Service, QoS) characteristic parameter, there is a problem that sensing accuracy and sensing efficiency cannot be ensured at the same time.

### SUMMARY

Embodiments of this application provide a quality of service characteristic parameter determining method, a data sending method, an apparatus, and a device, to resolve a problem that sensing accuracy and sensing efficiency cannot be ensured at the same time because there is no definition of a sensing QoS characteristic parameter in an existing technology.

According to a first aspect, a quality of service characteristic parameter determining method is provided, including:
determining, by a sending device, a sensing quality of service QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a second aspect, a quality of service characteristic parameter determining apparatus is provided, including:
a first determining module, configured to determine a sensing quality of service QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a third aspect, a quality of service characteristic parameter determining method is provided, including:
obtaining, by a receiving device, a sensing QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a fourth aspect, an apparatus for determining a quality of service characteristic parameter is provided, including:
a first obtaining module, configured to obtain a sensing QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a fifth aspect, a data sending method is provided, including:
obtaining, by a core network device, target data, where the target data includes a sensing QoS characteristic parameter or a sensing quality identity SQI; and
sending, by the core network device, the target data to a sending device or a receiving device, where the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a sixth aspect, a data sending apparatus is provided, including:
a second obtaining module, configured to obtain target data, where the target data includes a sensing QoS characteristic parameter or a sensing quality identity SQI; and
a first sending module, configured to send the target data to a sending device or a receiving device, where the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a seventh aspect, a sending device is provided. The sending device includes a processor, a memory, and a program or an instruction that is stored in the memory and that can be run on the processor, and when the program or the instruction is executed by the processor, the steps of the method according to the first aspect are implemented.

According to an eighth aspect, a sending device is provided, including a processor and a communication interface. The processor is configured to determine a sensing quality of service QoS characteristic parameter, where
the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a ninth aspect, a receiving device is provided. The receiving device includes a processor, a memory, and a program or an instruction that is stored in the memory and that can be run on the processor, and when the program or the instruction is executed by the processor, the steps of the method according to the third aspect are implemented.

According to a tenth aspect, a receiving device is provided, including a processor and a communication interface. The processor is configured to obtain a sensing QoS characteristic parameter, where
the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to an eleventh aspect, a core network device is provided. The core network device includes a processor, a memory, and a program or an instruction that is stored in the memory and that can be run on the processor, and when the program or the instruction is executed by the processor, the steps of the method according to the fifth aspect are implemented.

According to a twelfth aspect, a core network device is provided, including a processor and a communication interface. The processor is configured to obtain target data, where the target data includes a sensing QoS characteristic parameter or a sensing quality identity SQI. The communication interface is configured to send the target data to a sending device or a receiving device, where the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

According to a thirteenth aspect, a readable storage medium is provided. The readable storage medium stores a program or an instruction, and when the program or the instruction is executed by a processor, the steps of the method according to the first aspect, the third aspect, or the fifth aspect are implemented.

According to a fourteenth aspect, a chip is provided. The chip includes a processor and a communication interface, the communication interface is coupled to the processor, and the processor is configured to run a program or an instruction to implement the method according to the first aspect, the third aspect, or the fifth aspect.

According to a fifteenth aspect, a computer program product is provided. The computer program product is stored in a non-volatile storage medium, and the computer program product is executed by at least one processor to implement the steps of the method according to the first aspect, the third aspect, or the fifth aspect.

According to a sixteenth aspect, a communication device is provided, configured to perform the steps of the method according to the first aspect, the third aspect, or the fifth aspect.

In the embodiments of this application, a sensing QoS characteristic parameter is determined, so that a sensing signal sending can be accurately sent, thereby improving sensing accuracy and sensing efficiency.

### BRIEF DESCRIPTION OF DRAWINGS

FIG. 1 is a schematic flowchart of a quality of service characteristic parameter determining method according to an embodiment of this application;
FIG. 2 is a schematic diagram of a network node involved in an application case 1;
FIG. 3 is a schematic diagram of a V2X sensing scenario;
FIG. 4 is a schematic diagram of a concurrent sensing scenario;
FIG. 5 is a schematic diagram of mapping from data to a DRB in a concurrent sensing scenario;
FIG. 6 is a schematic diagram of modules of a quality of service characteristic parameter determining apparatus according to an embodiment of this application;
FIG. 7 is a first structural block diagram of a sending device according to an embodiment of this application;
FIG. 8 is a second structural block diagram of a sending device according to an embodiment of this application;
FIG. 9 is a second schematic flowchart of a quality of service characteristic parameter determining method according to an embodiment of this application;
FIG. 10 is a second schematic diagram of modules of a quality of service characteristic parameter determining apparatus according to an embodiment of this application;
FIG. 11 is a schematic flowchart of a data sending method according to an embodiment of this application;
FIG. 12 is a schematic diagram of modules of a data sending apparatus according to an embodiment of this application; and
FIG. 13 is a structural block diagram of a communication device according to an embodiment of the present application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and the term NR is used in most of the following descriptions, but these technologies can also be applied to an application other than an NR system application, for example, a 6^{th} generation (6th Generation, 6G) communications system.

Related technologies involved in this application are first described in detail as follows:

### 1. Integrated sensing and communication/ISAC

In recent decades, wireless communication and radar sensing (Communication&Sensing, C&S) are always developed in parallel, but have limited intersections. They have many commonalities in terms of signal processing algorithms, devices, and system architectures to some extent. In recent years, increasingly more researchers have pay attention to the two systems in terms of coexistence, cooperation, and joint design.

In the early days, people made extensive research on the coexistence of a communication system and a radar system. The research focuses on developing an effective interference management technology to make two independently deployed systems to run smoothly without mutual interference. Although the radar system and the communication system may be located at same location, or even physically integrated, two different signals are transmitted in time/frequency domain. The radar system and the communication system share same resources in cooperation to minimize interference to each other when working at the same time. Corresponding measures include beamforming, cooperative spectrum sharing, primary and secondary spectrum sharing, dynamic coexistence, and the like. However, effective interference cancellation generally has strict requirements on mobility of nodes and information exchange between nodes. Therefore, improvement to spectral efficiency is relatively limited. Because interference in a coexistent system is caused by transmitting two independent signals, it is natural to query whether one transmit signal can be used for both communication and radar sensing. The radar system usually uses specially designed waveforms such as short pulses and chirps to achieve high-power radiation and simplify receiver processing. However, these waveforms are not necessary for radar detection. For example, a passive radar or passive sensing uses different radio signals as sensing signals.

Machine learning, especially deep learning, further promotes the potential of non-dedicated radio signals for radar sensing. With these technologies, conventional radars are evolving towards more general wireless sensing. Wireless sensing herein may broadly refer to retrieving information from received radio signals rather than modulating communication data of a signal on a transmitter. For wireless sensing related to a sensing target location, dynamic parameters such as a target signal reflection delay, an angle of arrival (Angle of Arrival, AoA), an angle of departure (Angle of Departure, AoD), and Doppler may be estimated by using a common signal processing method. A physical of a feature sensing target may be implemented by a measurement device, an object, and a live inherent pattern signal. The two sensing manners may be respectively referred to as sensing parameter estimation and pattern recognition. In this sense, wireless sensing refers to more general sensing techniques and applications using radio signals.

Integrated sensing and communication (Integrated Sensing and Communication, ISAC) has the potential to integrate wireless sensing into a large-scale mobile network, which is referred to as a perceptive mobile network (Perceptive Mobile Networks, PMNs). The PMN may evolve from a current 5G mobile network, and is expected to become a ubiquitous wireless sensing network, and provides a stable and high-quality mobile communication service. The PMN can be built on an existing mobile network infrastructure without major changes to a network structure and a device. The PMN will free up a maximum capacity of a mobile network and avoid spending high infrastructure costs to build a new wide area wireless sensing network. With the expansion of coverage, integrated communication and sensing capabilities are expected to implement many new applications. The perceptive mobile network can provide both communication and wireless sensing services, and due to large broadband coverage and a powerful infrastructure, the perceptive mobile network can become a pervasive wireless sensing solution. Co-ordinated communication and sensing capabilities of the PMN will enhance the productivity of our society and help generate a large quantity of new applications that cannot be effectively implemented by existing sensor networks. Some early work on passive sensing using mobile signals has proven its potential, for example, GSM-based radio signal traffic monitoring, weather forecast, and rainfall remote sensing. The perceptive mobile network can be widely applied to communication and sensing in areas of transportation, communication, energy, precision agriculture, and safety, while existing solutions are either infeasible or inefficient. The perceptive mobile network also provides complementary sensing capabilities for existing sensor networks, has unique day and night operation functions, and can penetrate fog, leaves, or even solid objects.

### 2. Radar technology

Radars have developed for decades since the first half of the 20^{th} century. Modern radar systems are deployed all over the world and have a variety of applications, including air traffic control (Air Traffic Control, ATC), geophysical monitoring, weather observation, defense and security monitoring, and the like. Below 10 GHz, most of the spectrum resources are mainly allocated to radars, and existing wireless communication systems such as 5G NR, LTE, and Wi-Fi also exist within this spectrum range. At higher frequencies such as a millimeter wave, communication and radar platforms are also expected to coexist harmoniously. However, with further development of wireless communication technologies, increasingly more radar bands are interfered with. From a historical perspective, the radar and communication systems evolve toward miniaturization and a higher frequency band. Currently, on a millimeter wave band, hardware architectures, channel characteristics, and signal processing methods of existing radar and communication systems are very close to each other. From the perspective of civilian use, a large quantity of 5G/B5G emerging applications require joint design of sensing and communication, such as Internet of Things applications such as smart city and smart home, and intelligent traffic applications such as Internet of vehicles and self-driving. From a military perspective, the development of radio frequency systems such as a radar, communication, and electronic warfare has long been divided into a separated state, consuming a large quantity of spectrum and hardware resources, and reducing the effectiveness of a combat platform. To efficiently use a spectrum resource and serve a variety of emerging application scenarios of civilian and military applications, radar and communication spectrum sharing (Radar and Communication Spectrum Sharing, RCSS) has recently attracted great attention from academia and industry.

In general, an RCSS technology includes two research paths: (1) radar-communication coexistence (Radar-Communication Coexistence, RCC); (2) dual-functional radar-communication system (Dual-Functional Radar-Communication system, DFRC). The former considers that a separate radar and a communication system share a same spectrum, and how to design an effective interference cancellation and management technology to implement mutual non-interference. The latter considers that, in addition to sharing a same spectrum, the radar and the communication system share a same hardware platform, and how to design an integrated signal processing solution to implement communication and radar sensing functions at the same time. The RCC technology often requires the radar and the communication system to periodically exchange some information to realize cooperation and mutual benefit, such as a transmit waveform of the radar, a beam pattern, a modulation scheme of communication, a frame format, and channel state information between the radar and the communication system. In an actual system, this information exchange process has relatively high complexity. A DFRC technology directly implements spectrum sharing by using a shared hardware platform, without requiring additional information exchange. In addition, the DFRC technology can also improve performance of both parties by working together. As described above, currently, connotation and application of the DFRC technology are far from improving spectrum utilization, but are further extended to a variety of emerging civilian and military scenarios including an Internet of vehicles, indoor positioning, and hidden communication.

### 3. LTE/5G quality of service (Quality of Service, QoS)

QoS means that a network uses various underlying technologies to provide a better service capability for specified network communication to resolve network delay and blocking problems, thus realizing a transmission capability guarantee mechanism required by a specific service. When a network is congested, all data streams may be discarded. To meet requirements for different applications and quality of service of users, the network needs to allocate and schedule resources based on the requirements of users, and provide different quality of service for different data streams. An important data packet with strong instantaneity is processed first. For a common data packet with less instantaneity, a lower processing priority is provided, and is even discarded when the network is congested.

QoS is a technical concept drawn from the Internet. The International Telecommunication Union (ITU) defines quality of service (QoS) in the x.902 standard, that is, "Information technology - Open Systems Interconnection - Basic Reference Model": a set of quality requirements on the collective behavior of one or more objects. Some quality of service parameters such as a throughput, a transmission delay, and an error rate describe a speed and reliability of data transmission.

LTE is a QoS policy design based on a bearer. Radio bearers are classified into a signaling radio bearer (Signaling Radio Bearer, SRB) and a data radio bearer (Data Radio Bearer, DRB). The SRB is used for signaling transmission, the DRB is used for data transmission, and scheduling priorities of all SRBs are higher than those of all DRBs. A quality of service class identifier (QoS Class Identifier, QCI) is a parameter used by a system to identify a transmission characteristic of a service packet. QCI values corresponding to different bearer services are defined in the protocol TS 23.203. Based on different QCIs, bearers (Bearer) may be classified into two types: a guaranteed bit rate (Guaranteed Bit Rate, GBR)-type bearer and a non-GBR (Non-GBR)-type bearer. The GBR-type bearer is used for a service with a relatively high requirement for instantaneity, a scheduler needs to ensure a lowest bit rate for this type of bearer, and a range of QCI is 1 to 4. In addition to this minimum rate, a maximum rate is required. For the GBR bearer, an MBR is used to limit a maximum rate of the bearer. A maximum bit rate (Maximum Bit Rate, MBR) parameter defines an upper limit of a rate that can be reached when there are sufficient RB resources for the GBR bearer. A value of the MBR is greater than or equal to a value of the GBR. The non-GBR-type bearer is used for a service with a low requirement for instantaneity, no scheduler is required to guarantee a lowest bit rate for this type of bearer, and a range of QCI is 5 to 9. In the case of network congestion, the service needs to meet a requirement of reducing a rate. For non-GBR, an aggregate maximum bit rate (Aggregate Maximum Bit Rate, AMBR) of a terminal is used to limit a maximum rate of all non-GBR bearers.

5G QoS characteristics (5G QoS Characteristics) are a set of characteristic parameters obtained when each QoS flow is processed by each network node (UE, gNB, or UPF). A 5G characteristic parameter set is divided into a standardized QoS characteristic and an operator-specific (Operator-Specific) QoS characteristic. For the standardized QoS characteristic, a value of each parameter is standardized and pre-defined, and the standardized QoS characteristic is associated with a fixed SQI value (an identity marked with a series of parameters). For the operator-specific QoS characteristic, a value of a parameter is configured by an operator. A data flow in-band QoS marking mechanism is used in 5G. Based on a QoS requirement of a service, a gateway or an APP server marks a data flow with a corresponding QoS processing label, and a network side forwards a data packet based on the QoS label. The QoS label can change in real time based on a requirement of a service data stream to meet a service requirement in real time. A NAS of the GW maps a plurality of IP flows with a same QoS requirement to a same QoS flow. A gNB maps the QoS flow to the DRB, so that a wireless side adapts to the QoS requirement. A RAN side has a specific degree of freedom. For example, the gNB can convert the QoS flow into a DRB. Downlink mapping belongs to network implementation, and uplink mapping is configured based on reflective QoS or RRC. A 5G QoS model also supports a guaranteed bit rate (GBR QoS) QoS flow and a non-guaranteed bit rate (Non-GBR) QoS flow, and AMBR is also used to limit total bandwidth of non-GBR. The 5G QoS model also supports reflected QoS.

A quality of service characteristic parameter determining method, a data sending method, an apparatus, and a device provided in the embodiments of this application are described below by using specific embodiments and application scenarios thereof with reference to the accompanying drawings.

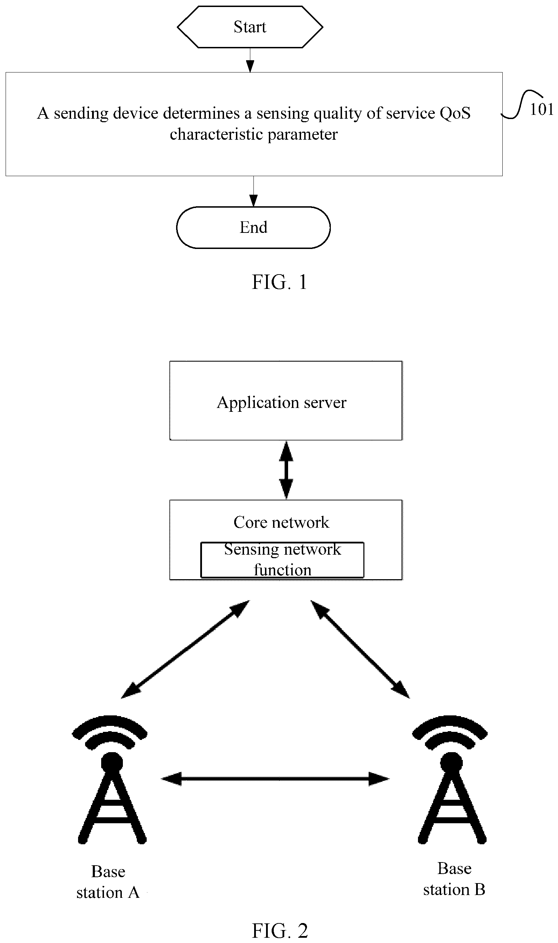

As shown in FIG. 1, an embodiment of this application provides a quality of service characteristic parameter determining method, including:
Step 101: A sending device determines a sensing quality of service QoS characteristic parameter.

It should be noted that the sensing QoS characteristic parameter is used to determine sensing parameter configuration information, so that the sending device sends a sensing signal based on the sensing parameter configuration information. In other words, the sensing QoS characteristic parameter is used to ensure accurate sending of the sensing signal.

Further, it should be noted that the sensing QoS characteristic parameter includes at least one of the following:

### A101. Sensing service type.

It should be noted herein that in this application, a sensing service type (Sensing Service Type) is divided based on two main requirements: a physical function range of a sensing service and a sensing real-time requirement. The sensing range includes two types: One type is a sensing service whose physical sensing range is greater than or equal to a preset value, that is, large-scale sensing (Large-scale Sensing, LSS) for which a corresponding physical sensing range is 10 meters, 100 meters, and kilometers. The other type is a sensing service whose physical sensing range is less than a preset value, that is, small-scale sensing (Small-scale Sensing, SSS), for which a corresponding physical sensing range is centimeters, centimeters, and meters. Based on a sensing real-time requirement, a delay critical type is added as defined by 5G QoS. Therefore, in this embodiment of this application, sensing service types may be classified into four types: delay-critical LSS (corresponding to a delay-critical sensing service for which a physical sensing range is greater than or equal to the preset value), LSS (corresponding to a sensing service for which a physical sensing range is greater than or equal to the preset value), delay critical SSS (corresponding to a delay-critical sensing service for which a physical sensing range is less than the preset value), and SSS (corresponding to a sensing service for which a physical sensing range is less than the preset value), which are respectively represented by sensing service types I to IV In other words, the sensing service type mentioned in this embodiment of this application includes at least one of the foregoing four types.

It should be noted herein that three service types: a guaranteed bit rate (GBR), a non-guaranteed bit rate (Non-GBR), and a delay-critical GBR (Delay Critical GBD) are defined in 5G, and data services with different real-time requirements are classified. One or more devices with wide service coverage and with a sensing capability can sense information such as a direction, a distance, and a speed of a target object by sending and receiving a wireless signal, or detect, track, identify, and image a target object, an event, an environment, and the like. In the future, with the deployment of small base stations with a large bandwidth capability of a high frequency band such as a millimeter wave and terahertz in a 6G network, sensing resolution is significantly improved compared with a centimeter wave, and therefore, a 6G network can provide a more precise sensing service. Some common sensing services are shown in the following Table 1.

**Table 1 Common sensing service classification**

| Physical sensing range | Real-time sensing requirements | Sensing function | Application purpose |
|---|---|---|---|
| Large | Medium | Weather and air quality | Meteorological, agricultural, and living services |
| Large | Medium | Traffic flow (road) and human flow (subway station) | Smart city, intelligent transportation, and business services |
| Large | Medium | Animal activity and migration | Animal husbandry and ecological environment protection |
| Large | High | Target tracing, distance measurement, speed measurement, and angle measurement | Many application scenarios of a conventional radar, V2X, and the like |
| Large | Low | Three-dimensional map construction | Navigation, smart city |
| Small | High | Gesture identification | Smart phone interaction, games, and smart home |
| Small | High | Heartbeat/respiration | Health monitoring and medical care |
| Small | Medium | Imaging | Security inspection and logistics |
| Small | Low | Material | Construction, manufacturing, exploration, and the like |

### A102. Sensing priority level.

It should be noted that the sensing priority level is used to determine a resource scheduling priority of a sensing signal.

### A103. Sensing delay budget (Sensing Delay Budget, SDB).

It should be noted that the sensing delay budget is used to define a maximum sensing delay of a sensing service, and is used to quantitatively describe a real-time requirement of the sensing service.

### A104. Sensing resolution (Sensing Resolution, SR).

It should be noted that the sensing resolution is used to define fineness of a sensing service, and is related to a network hardware device and a specific resource configuration. In addition, this factor relates to different configuration resources due to different sensing services. For example, distance resolution is related to configured sensing signal bandwidth, and angle resolution is related to an antenna aperture of a base station or a terminal.

### A105. Maximum sensing range (Maximum Sensing Range, MSR).

It should be noted that the maximum sensing range is used to define a maximum measurement range of a sensing measurement amount supported by a sensing service.

### A106. Sensing error (Sensing Error, SE).

It should be noted that the sensing error is used to define sensing performance of a sensing service, that is, sensing accuracy, and is related to a network hardware device, a specific resource configuration, and a signal-to-noise ratio (SNR). The sensing error may be defined from one of the following three aspects: (1) a maximum error, (2) a percentage of a maximum error to a real value (relative to the maximum error), and (3) relative error distribution.

### A107. Continuous sensing capacity (Continuous Sensing Capacity, CSC).

It should be noted that the continuous sensing capacity is used to define a capability of a sensing service for supporting continuous sensing, and is mainly divided into single sensing and continuous sensing (for example, target tracking and scanning imaging).

### A108. Sensing Update Rate.

It should be noted that the sensing update rate is used to define a result update rate of sensing processing that requires a continuous sensing service.

### A109. Sensing signal quality.

It should be noted that the sensing signal quality is used to define sensing signal quality required by a sensing service, and different sensing services have different requirements.

### A110. Sensing security.

It should be noted that the sensing security defines security requirements of different sensing services, and is classified into three levels.

### A111. Sensing privacy.

It should be noted that the sensing privacy defines privacy requirements of different sensing services, and is classified into three levels.

### A112. Detection probability.

It should be noted that the detection probability is defined as a probability of determining, for a capability of determining whether there is a sensing target, that there is the target.

### A113. False alarm probability.

It should be noted that the false alarm probability is defined as a probability of determining, for a capability of determining whether there is a sensing target, that there is no target.

Optionally, Table 2 provides a specific definition manner of the sensing QoS characteristic parameter, and the sensing QoS characteristic parameter includes at least one of parameters in Table 2.

**Table 2 Definition of sensing QoS characteristic parameter**

| Parameter | Definition | Subdivided parameter | Notes |
|---|---|---|---|
| Sensing service type | To define a sensing service type based on a physical sensing range and a real-time requirement. Specifically, Type I: delay-critical large-scale sensing (Delay Critical LSS) with a high real-time requirement; Type II: large-scale sensing (LSS) with a low real-time requirement; Type III: delay-critical small-scale sensing (Delay Critical SSS) with a low real-time requirement; Type IV: small-scale sensing (SSS) with a low real-time requirement. | N/A | Divided based on a sensing calculation result or a sensing intermediate calculation amount (intermediate result) and a transmission real-time requirement. |
| Sensing priority level | A priority level is used to determine a resource scheduling priority of a sensing QoS flow. | N/A | This parameter is used to distinguish sensing QoS flows of one UE, and is also used to distinguish sensing QoS flows of different terminals. A smaller parameter indicates a higher priority. |
| Sensing delay budget (Sensing Delay Budget, SDB) | To define a maximum sensing delay of a sensing service to quantitatively describe a real-time requirement of the sensing service. | N/A | A value unit is usually ms. A smaller value indicates a higher sensing real-time requirement. |
| Sensing resolution (Sensing Resolution, SR) | To define fineness of a sensing service, and being related to a network hardware device and a specific resource configuration. This factor varies with different sensing services and different involved configuration resources. For example, distance resolution is related to configured sensing signal bandwidth, and angle resolution is related to an antenna aperture of a base station or a terminal. | Distance resolution, speed resolution, angle resolution, imaging resolution, temperature resolution, air pressure resolution, humidity resolution, and the like | Different sensing services have different sensing resolution. |
| Maximum sensing range (Maximum Sensing Range, MSR) | To define a maximum measurement range of a sensing measurement amount supported by a sensing service. | Maximum sensing distance, maximum sensing speed, maximum sensing angle, maximum sensing temperature, maximum sensing pressure, maximum sensing humidity, and the like | Different sensing services have different maximum sensing limits. |
| Sensing error (Sensing Error, SE) | To define sensing performance of a sensing service, that is, sensing accuracy, and being related to a network hardware device, a specific resource configuration, and an SNR. The sensing error may be defined in one of the following three aspects: (1) a maximum error; (2) a percentage of a maximum error to a real value (a relative maximum error); (3) relative error distribution | N/A | The sensing error is different from the sensing resolution. The former defines a maximum deviation between a real sensing value and an actual sensing result that can be tolerated by a service, and the latter defines sensing accuracy requirements of different sensing services. |
| Continuous sensing capacity (Continuous Sensing Capacity, CSC) | To define a capability of a sensing service to support continuous sensing, which is mainly divided into single sensing and continuous sensing (for example, target tracking and scanning imaging). | N/A | May not be applicable to some sensing services |
| Sensing update rate | To define a result update rate of sensing processing that requires a continuous sensing service. | Distance update rate, speed update rate, angle update rate, imaging update rate, temperature update rate, air pressure update rate, humidity update rate, and the like | Applicable to a sensing service that requires continuous sensing. |
| Sensing signal quality | To define sensing signal quality required by a sensing service. Different sensing services have different requirements. | Received signal strength, signal-to-noise ratio, signal to interference plus noise ratio, signal clutter ratio, signal sidelobe characteristic, and peak-to-average ratio PAPR of a sensing signal | |
| Sensing security | To define security requirements of different sensing services, and being divided into three levels. | N/A | Subdivided subsequently based on a newly added service or a service security level. Three levels may be expanded to more than three levels. |
| Sensing privacy | To define privacy requirements of different sensing services, and being divided into three levels. | N/A | Subdivided subsequently based on a newly added service or a service security level. Three levels may be expanded to more than three levels. |
| Detection probability | To define a probability of determining, for a capability of determining whether there is a sensing target, that there is the target. | N/A | Only applicable to some services, such as radar-sensing services. |
| False alarm probability | To define a probability of determining, for a capability of determining whether there is a sensing target, that there is no target. | N/A | Only applicable to some services, such as radar-sensing services. |
| ... | ... | ... | ... |

Further, it should be noted that the sensing QoS characteristic parameter in this embodiment of this application may be determined by the sending device, or may be determined based on a QoS characteristic parameter received from another device. These two manners of obtaining the sensing QoS characteristic parameter are separately described in detail below.

Manner 1: The sending device determines the sensing QoS characteristic parameter.

Optionally, in this case, an available implementation of step 101 in this embodiment of this application includes:
Step 1011: The sending device obtains a QoS parameter set.

It should be noted that the QoS parameter set is a correspondence between a sensing quality identity (Sensing Quality Identity, SQI) and a value of the sensing QoS characteristic parameter.

It should be further noted herein that the QoS parameter set may be agreed upon in a protocol or notified by a core network device.

Step 1012: The sending device receives an SQI notified by a core network device or a receiving device.

Step 1013: Determine the sensing QoS characteristic parameter based on the SQI and the QoS parameter set.

In other words, in this case, a QoS parameter set is preset, and the QoS parameter set may be embodied in a form of a correspondence table. A sensing service requester can know an SQI that is in the QoS parameter set and that is corresponding to a service requested by the sensing service requester. The sending device can determine, by querying the QoS parameter set by using the SQI, a sensing QoS characteristic parameter corresponding to the SQI.

In other words, similar to a QCI in LTE, to divide QoS of different data service types, a 5G quality identity (5QI) is defined in 5G, and is used to identify a 5G QoS characteristic. A standardized 5G QoS characteristic has a standardized predefined value of each parameter and is associated with a fixed SQI value (an index that marks a series of parameters). The standardized SQI is defined in 3GPP TS 23.501.

To define QoS characteristics of different sensing services, sensing quality identity (Sensing Quality Identity, SQI) values corresponding to different QoS are given herein, as shown in Table 3. In actual use, the SQI needs to include at least one of parameters in Table 3 and a corresponding value of the parameter. For some sensing QoS characteristic parameters, a plurality of description forms may be included, for example, a sensing error may be a maximum absolute error (as shown in Table 3), or may be a maximum relative error (a percentage of an error to a real value), or may even be described by error probability distribution.

**Table 3 Definition manner 1 of a sensing quality identity SQI**

| S Q I v al u e | Se nsi ng ser vic e typ e | Se nsi ng pri ori ty lev el | Se nsi ng del ay bu dg et | Sen sin g res olut ion | Ma xim um sens ing ran ge | Sens ing error (ma xim um error ) | Con tinu ous sens ing capa city | Sen sin g upd ate rate | Se nsi ng sig nal qua lity | Se nsi ng sec urit y | Se nsi ng pri vac y | Det ecti on pro babi lity | Fals e alar m pro babi lity | Service case |
|---|---|---|---|---|---|---|---|---|---|---|---|---|---|---|
| 5 | I | 4 | 50 ms | Dis tan ce ≤3 m; An gle: 1° | Dist anc e: 500 m; Ang le: 180 ° | Dist ance is 3 m; Angl e: 2° | Yes | On ce/ 5 s | SN R≥ 10 dB | Me diu m | Me diu m | ≥80 % | ≤5 % | Outdoor user position ing and tracing |
| 7 | | 1 | 5 ms | Dis tan ce ≤0. 5 m; An gle: 1° | Dist anc e: 100 m; Ang le: 180 ° | Dist ance : 1 m; Angl e: 2° | Yes | 10 tim es/s | SN R≥ 10 dB | Hi gh | Me diu m | ≥95 % | ≤1 % | V2X sensing: Pedestri an detectio n, real-tim e vehicle position ing |
| ... | | ... | ... | ... | ... | ... | ... | ... | ... | ... | ... | ... | ... | ... |
| 1 | II | 10 | 20 00 ms | Dis tan ce: 10 m; An gle: 2° | Dist anc e: 500 m; Ang le: 360 ° | Dist ance 15 m; Angl e: 5° | No | N/ A | SN R≥ 5 dB | Lo w | Lo w | N/A | N/A | Three-di mension al terrain and geomor phology sensing and building surface reconstr uction |
| 2 | | 11 | 30 0 ms | 5% | 100 % | 5% | Yes | On ce/ min | SN R≥ 5 dB | Lo w | Lo w | N/A | N/A | Specific regional weather detectio n and forecast, (relative ) humidit y sensing, PM2.5 sensing |
| 3 | | 8 | 50 0 ms | 3 | N/A | 101 min | Yes | On ce/ min | SN R≥ 5 dB | Lo w | Lo w | N/A | N/A | Vehicle flow sensing |
| 4 | | 9 | 50 0 ms | 5 | N/A | 40 pers ons/ min | Yes | On ce/ 5 min | SN R≥ 5 dB | Lo w | Lo w | N/A | N/A | Human flow sensing |
| 6 | | 5 | 50 0 ms | Dis tan ce: 5m | Dist anc e: 200 m | Dist ance : 10 m | Yes | 2 tim es/ min | SN R≥ 5 dB | Me diu m | Me diu m | 60 % | 10 % | Situatio n sensing, for example automat ically deliveri ng a service push when sensing that a user enters a specific region |
| ... | | ... | ... | ... | ... | ... | ... | ... | ... | ... | ... | ... | ... | ... |
| 8 | III | 3 | 10 ms | N/ A | Dist anc e: 0.1-3 m | 0.1 m | Yes | 10 tim es/s | SN R≥ 10 dB | Me diu m | Me diu m | 90 % | 5% | Augmen ted reality sensing of a low-del ay eMBB applicati on, and gesture, posture, and motion recognit ion |
| 9 | | 2 | 15 ms | N/ A | Dist anc e: 3 m | N/A | Yes | 10 tim es/s | SN R≥ 10 dB | Hi gh | Hi gh | N/A | N/A | Health monitori ng: Heartbe at/respir ation sensing |
| ... | | ... | ... | ... | ... | ... | ... | ... | ... | ... | ... | ... | ... | ... |
| 0 | IV | 6 | 80 0 ms | Dis tan ce ≤1 cm; An gle: 1° | Dist anc e: 30 cm | Dist ance : 2 cm; Angl e: 2° | Yes | 60 tim es/s | SN R≥ 15 dB | Me diu m | Me diu m | N/A | N/A | Short-ra nge sensing: Scannin g imaging |
| 1 | | 7 | 20 0 ms | Dis tan ce ≤5 m; An gle: 5° | Dist anc e: 100 m | Dist ance ≤10 m; Angl e: 10° | No | N/ A | SN R≥ 15 dB | Hi gh | Hi gh | N/A | N/A | Short-ra nge sensing of a terminal : RFID/b ackscatt er informat ion interacti on |
| ... | | ... | ... | ... | ... | ... | ... | ... | ... | ... | ... | ... | ... | ... |

Table 4 provides another example of a method for defining an SQI. A function of Table 4 is the same as that of Table 3, except that a definition method is slightly different. In Table 4, sensing service types are divided only based on a physical function range of a sensing service. In this way, the sensing service type (Sensing Service Type) includes two types: large-scale sensing (Large-Scale Sensing, LSS) for which a corresponding physical sensing range is ten meters, one hundred meters, and kilometers, and small-scale sensing (Small-scale Sensing, SSS) for which a corresponding physical sensing range is centimeters, decimeters, and meters.

**Table 4 Definition manner 2 of a sensing quality identity SQI**

| S Q I v al u e | Se nsi ng ser vic e typ e | Se nsi ng pri ori ty lev el | Se nsi ng del ay bu dg et | Sen sin g res olut ion | Ma xim um sen sing ran ge | Sens ing error (max imu m error ) | Con tinu ous sens ing | Sen sin g upd ate rate | Se nsi ng sig nal qu alit y | Se nsi ng sec urit y | Se nsi ng pri vac y | Det ecti on pro babi lity | Fals e alar m pro babi lity | Service case |
|---|---|---|---|---|---|---|---|---|---|---|---|---|---|---|
| 5 | LS S | 4 | 50 ms | Dis tan ce ≤3 m; An gle: 1° | Dist anc e: 500 m; An gle: 180 ° | Dist ance : 3 m; Angl e: 2° | Yes | On ce/ 5 s | SN R≥ 10 dB | Me diu m | Me diu m | ≥80 % | ≤5 % | Outdoor user position ing and tracing |
| 7 | | 1 | 5 ms | Dis tan ce ≤0. 5 m; An gle: 1° | Dist anc e: 100 m; An gle: 180 ° | Dist ance : 1 m; Angl e: 2° | Yes | 10 tim es/s | SN R≥ 10 dB | Hi gh | Me diu m | ≥95 % | ≤1 % | V2X sensing: Pedestri an detectio n and real-tim e vehicle position ing |
| 1 | | 10 | 20 00 ms | Dis tan ce: 10 m; An gle: 2° | Dist anc e: 500 m; An gle: 360 ° | Dist ance : 15 m; Angl e:5° | No | N/ A | SN R≥ 5 dB | Lo w | Lo w | N/A | N/A | Three-di mension al terrain and geomor phology sensing and building surface reconstr uction |
| 2 | | 11 | 30 0 ms | 5% | 100 % | 5% | Yes | On ce/ min | SN R≥ 5 dB | Lo w | Lo w | N/A | N/A | Specific region weather detectio n and forecast, humidit y sensing, and PM2.5 sensing |
| 3 | | 8 | 50 0 ms | 3 veh icle s | N/ A | 10 vehi cles/ min | Yes | On ce/ min | SN R≥ 5 dB | Lo w | Lo w | N/A | N/A | Vehicle flow sensing |
| 4 | | 9 | 50 0 ms | 5 | N/ A | 40 pers ons/ min | Yes | On ce/ 5 min | SN R≥ 5 dB | Lo w | Lo w | N/A | N/A | Human flow sensing |
| 6 | | 5 | 50 0 ms | Dis tan ce: 5 m | Dist anc e: 200 m | Dist ance : 10 m | Yes | 2 tim es/ min | SN R≥ 5 dB | Me diu m | Me diu m | 60 % | 10 % | Situatio n sensing, for example , automat ically deliveri ng a service push when sensing that a user enters a specific region |
| ... | | ... | ... | ... | ... | ... | ... | ... | ... | ... | ... | ... | ... | ... |
| 8 | | 3 | 10 ms | N/ A | Dist anc e: 0.1-3 m | 0.1 m | Yes | 10 tim es/s | SN R≥ 10 dB | Me diu m | Me diu m | 90 % | 5% | Augmen ted reality sensing of a low-del ay eMBB applicati on, and gesture, posture, and motion recognit ion |
| | SS S | | | | | | | | | | | | | |
| 9 | | 2 | 15 ms | N/ A | Dist anc e3 m | N/A | Yes | 10 tim es/s | SN R≥ 10 dB | Hi gh | Hi gh | N/A | N/A | Health monitori ng: Heartbe at/respir ation sensing |
| 1 0 | | 6 | 80 0 ms | Dis tan ce ≤1 cm; An gle: 1° | Dist anc e 30 cm | Dist ance : 2 cm; Angl e: 2° | Yes | 60 tim es/s | SN R≥ 15 dB | Me diu m | Me diu m | N/A | N/A | Short-ra nge sensing: Scannin g imaging |
| 1 1 | | 7 | 20 0 ms | Dis tan ce ≤5 m; An gle: 5° | Dist anc e: 100 m | Dist ance ≤10 m; Angl e: 10° | No | N/ A | SN R≥ 15 dB | Hi gh | Hi gh | N/A | N/A | Short-ra nge sensing of a terminal : RFID/b ackscatt er informat ion interacti on |
| ... | | ... | ... | ... | ... | ... | ... | ... | ... | ... | ... | ... | ... | ... |

It should be noted that the foregoing SQI values are merely examples, and are not necessarily sequence number values that are finally standardized or actually used by an operator. An actual use case and a sensing QoS characteristic parameter are not limited to those listed in Table 2. A main purpose of defining Table 2 and Table 3 or Table 4 in this application is to provide a framework for defining sensing QoS for subsequent standardization and reference by a communication operator.

### 2. Another device notifies the sensing QoS characteristic parameter.

Optionally, in this case, an implementation of step 101 in this embodiment of this application includes:
The sending device receives first information sent by a core network device or a receiving device, where
the first information is used to indicate the sensing QoS characteristic parameter.

In other words, in this case, the sensing QoS characteristic parameter does not need to be determined by the sending device, but may be directly obtained from another device. Optionally, in a case that the sending device is a base station, the sensing QoS characteristic parameter may be directly notified by the core network device to the base station, and in a case that the sending device is a terminal, the sensing QoS characteristic parameter is generally notified by a base station to the terminal. Optionally, the base station may be used as a receiving device of a sensing signal, and in this case, a sensing QoS characteristic parameter of the base station may be notified by the core network device, or may be determined by the base station by using the SQI and the QoS parameter set in the foregoing manner.

It should be noted that, an implementation of the first information is that the first information carries the sensing QoS characteristic parameter, or may be simply understood as that the first information is the sensing QoS characteristic parameter.

Optionally, after determining that the sensing QoS characteristic parameter is obtained, the sending device may determine sensing parameter configuration information based on the sensing QoS characteristic parameter, and then send a sensing signal to the receiving device based on the sensing parameter configuration information. Correspondingly, after obtaining the sensing QoS characteristic parameter, the receiving device also determines the sensing parameter configuration information based on the sensing QoS characteristic parameter, and further receives the sensing signal by using the sensing parameter configuration information. It should be noted that, if the sensing signal is sent and received in this manner, accuracy of transmission of the sensing signal can be ensured.

Optionally, the sensing parameter configuration information mentioned in this embodiment of this application includes but is not limited to at least one of the following:
bandwidth of the sensing signal, a quantity of transmit antennas of the sensing signal, transmit power of the sensing signal, a period of the sensing signal, and a quantity of pulses of the sensing signal.

Optionally, to implement accurate measurement on the sensing signal, this embodiment of this application further includes:
the sending device determines a measurement amount of a sensing signal based on the sensing QoS characteristic parameter; and
the sending device sends the measurement amount to a receiving device.

Correspondingly, after obtaining the measurement amount of the sensing signal, the receiving device measures the sensing signal based on the measurement amount to determine a measurement value corresponding to the measurement amount. It should be noted that the receiving device may directly receive the measurement amount sent by the sending device, or may determine, based on the sensing QoS characteristic parameter, that the measurement amount of the sensing signal is obtained.

It should be further noted that, to successfully send the sensing signal, the sending device should further know devices that participate in this time of sensing. Specifically, this embodiment of this application further includes one of the following:
B11. The sending device receives a sending device and a receiving device that are sent by the core network device or the receiving device and that participate in sensing.

It should be noted that the core network device may determine, by using the sensing QoS characteristic parameter, that the sending device and the receiving device that participate in sensing are obtained. In a case that the sending device is a base station, the core network device may directly send the sending device and the receiving device that participate in sensing to the base station. In a case that the sending device is a terminal and the receiving device is a base station, the core network device needs to first send the sending device and the receiving device that participate in sensing to the receiving device, and then the receiving device sends the sending device and the receiving device that participate in sensing to the sending device.

B12. The sending device determines, based on the sensing QoS characteristic parameter, a sending device and a receiving device that participate in sensing.

Optionally, in a case, the sending device and the receiving device that participate in sensing may be a quantity of sending devices and receiving devices that participate in sensing.

It should be further noted that, to ensure that the sending device can accurately send the sensing signal, the sending device needs to further obtain a sensing manner of a sensing service. The sensing manner is used to indicate a receive/transmit end of the sensing signal, and send the sensing signal based on the sensing manner. Optionally, the sensing manner may be obtained by the core network device based on the sensing QoS characteristic parameter and sent to the sending device, or may be obtained by the core network device based on the sensing QoS characteristic parameter and sent to the receiving device and then sent to the sending device. Alternatively, the sensing manner may be that the sending device determines a sensing manner of a sensing service based on the sensing QoS characteristic parameter.

It should be noted that different sensing manners indicate different receive/transmit ends of sensing signals. In other words, the sensing manner is associated with an entity that receives and sends the sensing signal. Specifically, a relationship between the entity corresponding to the sensing manner and a received/received signal includes at least one of the following:
C11. A first network node sends a sensing signal, and a second network node receives the sensing signal.

This case means that a base station A sends a sensing signal, and a base station B receives the sensing signal.

C12. A first network node sends and receives a sensing signal.

This case means that a base station A sends a sensing signal, and the base station A receives the sensing signal.

C13. A first network node sends a sensing signal, and a terminal device associated with the first network node receives the sensing signal.

This case means that a base station A sends a sensing signal, and a terminal receives the sensing signal.

C14. A first terminal device sends a sensing signal, and a second terminal device receives the sensing signal.

This case means that a terminal A sends a sensing signal, and a terminal B receives the sensing signal.

C15. A first terminal device sends and receives a sensing signal.

This case means that a terminal A sends a sensing signal, and the terminal A receives the sensing signal.

C16. A first terminal device sends a sensing signal, and a first network node receives the sensing signal.

This case means that a terminal A sends a sensing signal, and a base station A receives the sensing signal.

Generally, to quickly determine, based on the sensing QoS characteristic parameter, to obtain the sensing parameter configuration information, the measurement amount, the sensing manner, and the sending device and the receiving device that participate in sensing, in this embodiment of this application, a correspondence table between the sensing QoS characteristic parameter and the sensing parameter configuration information, the measurement amount, the sensing manner, and the sending device and the receiving device that participate in may be established. When one item needs to be obtained, only corresponding data needs to be obtained by querying the table. Generally, the sensing QoS characteristic parameter may include a value combination of a plurality of parameters in Table 2, and each value combination is corresponding to one SQI in Table 3. In other words, the sensing QoS characteristic parameter corresponds to the SQI. In this application, a correspondence table between the SQI and the sensing parameter configuration information, the measurement amount, the sensing manner, and the sending device and the receiving device that participate in sensing is established, and the corresponding sensing parameter configuration information, the measurement amount, the sensing manner, and the sending device and the receiving device that participate in sensing are obtained by querying the table based on the SQI corresponding to the sensing QoS characteristic parameter.

It should be noted that based on several SQI values and sensing service types defined in Table 3 or Table 4, Table 5 provides a corresponding parameter configuration and sensing manner suggestions (based on Table 3 as an example).

**Table 5 Typical SQI values, sensing parameter configurations corresponding to sensing service types, and sensing manners**

| SQI value | Service type | Sensing node | Parameter configuration | Sensing measurement amount | Sensing manner | Notes |
|---|---|---|---|---|---|---|
| 1 | II | A plurality of outdoor macro base stations + a plurality of outdoor mobile terminals | Bandwidth: 100/400 MHz; Quantity of antennas: 64; Quantity of sensing cooperation terminals: 100; Transmit power ≥ 25 dBm | Multipath angle of arrival, multipath angle of departure, multipath delay | Abase station sends and receives a sensing signal; or a base station A sends a sensing signal and a base station B receives the sensing signal; or a base station and a user terminal send/receive a sensing signal. | A base station near a sensing map needs to perform sensing. If the base station sends and receives a sensing signal, or a base station A transmits a sensing signal and a base station B receives the sensing signal, a mobile terminal does not need to cooperate. |
| | | | | | | Otherwise, users near the map need to cooperate. The base station may use a higher configuration based on a situation of the base station. |
| 2, 6 | II | A plurality of outdoor macro base stations | Bandwidth = 20 MHz; Quantity of antennas ≥ 1; Transmit power ≥ 25 dBm | RSRP | Abase station A sends a sensing signal, and a base station B receives the sensing signal; or a base station and a user terminal send/receive a sensing signal. | A base station near a sensing area needs to perform sensing without terminal cooperation. |
| 3 and 4 | II | A single outdoor macro base station and an indoor micro base station | Bandwidth: 20/100 MHz; Quantity of antennas ≥ 1; Quantity of sensing signal pulses: 50; Sensing signal period: 10 ms | RSRP; or delay and Doppler | A base station sends and receives a sensing signal; or a base station A sends a sensing signal and a base station B receives the sensing signal. | When a measurement RSRP solution is used, there is no requirement for bandwidth. When a delay-doppler spectrum measurement solution is used, bandwidth of a sensing signal needs to be configured. |
| 5 | I | A single outdoor macro base station | Bandwidth: 100/400 MHz; Quantity of antennas ≥ 64; Quantity of sensing signal pulses: 100; Sensing signal period: 5 ms | LOS diameter angle of arrival, angle of departure, delay, and Doppler frequency | Abase station sends and receives a sensing signal; or a base station A sends a sensing signal and a base station B receives the sensing signal. | Bandwidth is 100 MHz, and distance resolution is 3 m; or bandwidth is 400 MHz, and distance resolution is 0.75 m. The sensing signal period 5 ms corresponds to a target sensing speed ≤ 30 km/h. |
| 7 | I | A single outdoor macro base station and a micro base station | Bandwidth =800 MHz; Quantity of antennas ≥64; Quantity of sensing signal pulses: 100; Sensing signal period: 1 ms | LOS diameter angle of arrival, angle of departure, a delay, and Doppler frequency | Abase station sends and receives a sensing signal; or a base station and a user terminal send/receive a sensing signal. | Bandwidth is 800 MHz, and distance resolution is 0.375 m. The sensing signal period 1 ms corresponds to a target sensing speed ≤ 150 km/h. |
| 8 and 9 | III | Indoor small cell station, wifi | Bandwidth = 20/40/80/160 MHz; | RSRP; or LOS diameter angle of arrival, angle of departure, delay, and Doppler frequency | Abase station sends and receives a sensing signal. | |
| | | | Quantity of antennas = 2/3/4/8; | | | |
| | | | Quantity of sensing signal pulses: 100; | | | |
| | | | Sensing signal period: 1 ms | | | |
| 10 and 11 | IV | Mobile terminal and dedicated sensing terminal | Bandwidth = 100/400/800 MHz/2 GHz; Quantity of antennas ≥ 4 | LOS diameter angle of arrival, angle of departure, and a delay | Abase station sends and receives a sensing signal. | |
| ... | ... | ... | ... | ... | ... | ... |

Further, it should be noted that, an implementation of step 103 in this embodiment of this application may be:
The sending device maps the sensing signal to a radio bearer (Radio Bearer, RB) by using a target mapping rule; and
sends a sensing signal to the receiving device by using the RB; where
the target mapping rule includes at least one of the following:
   a plurality of sensing signals are mapped to a same RB; and
   one sensing signal is mapped to one RB.

Correspondingly, the receiving device also receives the sensing signal in a same manner.

It should be noted that the RB includes at least one of a signaling radio bearer (SRB) and a data radio bearer (DRB).

It should be noted that, in a 5G system, a definition of a QoS parameter may be used as a basis for dividing a QoS flow by a core network for a data service, to implement mapping control of the QoS flow. A QoS control parameter QoS Profile used by a gNB is allocated by a session management function (Session Management Function, SMF), and a SQI value in 5G is included in a parameter set QoS configuration (QoS Profile) of the core network. In this application, the sensing QoS parameter is allocated to the gNB by a sensing network function unit/sensing network element (Sensing Network Function, SNF). Because LTE/5G QoS is designed for transmission of a data service, usage and a control process for QoS may be quite different from those of sensing QoS.

In this application, only a case that a dedicated sensing signal is used for sensing is temporarily considered, that is, a sensing signal and a data signal on a RAN side are time division multiplexing or frequency division multiplexing. The sensing signal (the sequence/waveform) may be a pseudo-random sequence, such as an m sequence or a Gold sequence. Generally, the sensing signal is directly stored on each sensing node (such as an outdoor macro base station, an indoor small cell, a dedicated sensing terminal, and a mobile terminal), and is directly invoked when a sensing function is triggered, or is directly generated through calculation and used based on a local sensing signal sequence generation algorithm. The sensing signal data may be sent together with conventional data, and sensing is performed in a time division/frequency division multiplexing manner; or may be separately sent (not together with a data service) to complete sensing. Because the sensing signal needs to pass through a wireless air interface, a mapping relationship between an SQI and an air interface radio bearer (RB) needs to be further defined. In addition, because a sensing service involves air interface signaling interaction and sensing data transmission and reception, both an SRB and a DRB are required for support. Sensing signaling is carried on the SRB, and sensing signal data is carried on the DRB. A mapping between the SQI and the RB may be multiple-to-one, or may be one-to-one. When only a sensing service exists, the sensing QoS flow may use the SRB and the DRB alone. A QoS flow to DRB mapping rule may be determined by a service data adaptation protocol (Service Data Adaptation Protocol, SDAP) layer based on the SQI. Table 6 provides a possible mapping relationship between an SQI and a DRB based on several types of typical sensing services summarized in Table 1 and SQI values defined in Table 3.

**Table 6 Possible mapping manner from a sensing QoS flow to a DRB**

| DRB ID | SQI | Sensing service type |
|---|---|---|
| 1 | {1, 2} or a subset thereof | II |
| 2 | {3, 4, 5, 6} or a subset thereof | I/II |
| 3 | {7} | I |
| 4 | {8, 9} or a subset thereof | III |
| 5 | {10} | IV |
| 6 | {11} | IV |

Optionally, the sending device in this embodiment of this application may be a base station, or may be a terminal. In a case that the sending device is a base station, the receiving device may be a base station, or may be a terminal. In a case that the sending device is a terminal, the receiving device may be a base station, or may be a terminal. In addition, it should be further noted that, for a same sensing service, there may be one or more (that is, two or more) sending devices, and there may also be one or more receiving devices.

Specific application cases in actual application are described below by using examples.

Specific application case 1: A sensing network element sends a sensing QoS parameter to perform three-dimensional map sensing.

It is assumed that a third-party (that is, a third party other than a network (including an access network and a core network) and a user) sensing application requests the network to perform three-dimensional map sensing on a region by using an outdoor macro base station. For example, a third-party application server initiates a sensing request to a sensing network function (Sensing Network Function, SNF) unit/sensing network element or another network function unit/network element in a core network, and the sensing network element notifies a plurality of base stations near a sensing map to perform a sensing operation. A sensing manner may be that a base station sends and receives a sensing signal and performs sensing operation processing; or a base station A transmits a sensing signal, and a base station B receives the sensing signal and performs sensing operation processing; or a mobile phone terminal may send a sensing signal in uplink, and a base station receives the sensing signal and performs sensing operation processing.

When the base station sends and receives sensing or the base station A performs sending and the base station B performs receiving, a network device involved in this case is shown in FIG. 2. In this case, main implementation mainly includes the following:
(1) The third-party sensing application server may send a sensing QoS characteristic parameter or a sensing service request (the sensing service request carries an SQI) to the sensing network element.
   If the sensing QoS characteristic parameter is directly sent, and the sensing QoS characteristic parameter is a standardized sensing QoS characteristic parameter and a standardized sensing service, the third-party sensing application server may directly send an SQI value (or a sensing QoS characteristic parameter including an SQI) to a sensing node base station. The base station may directly determine a sensing service type and sensing parameter configuration information of the sensing node based on the SQI value (or the characteristic QoS parameter including the SQI), so that it is convenient for the sensing node to schedule a sensing resource and an operation resource to perform sensing processing, and signaling overheads are reduced while flexibility is improved. If the sensing QoS characteristic parameter is an operator-specific sensing QoS characteristic parameter, a specific QoS parameter set needs to be transmitted between network nodes. The SQI/sensing QoS parameter set is forwarded by the sensing network element to a corresponding sensing node. In this example, a base station that meets a sensing condition (including: having a sensing capability and can provide a parameter configuration that meets a sensing requirement) in a three-dimensional map region includes two nodes: a base station A and a base station B, and the two nodes may be a single base station or may be a plurality of base stations. If a third-party sensing application server sends only the sensing request to the sensing network element, the sensing network element may also determine, based on the sensing request, a sensing QoS characteristic parameter corresponding to the sensing service, and deliver the SQI/sensing QoS parameter set to a corresponding sensing node.
(2) The sensing network function/sensing network element may be a separate function/physical entity, or may be deployed on a common server of a core network as one of core network functions, or may be deployed on a base station side as one of functions of a base station. Finally, in this case, the third-party sensing application server may directly send a sensing request/sensing QoS characteristic parameter to the base station, for example, an SQI or an operator-defined QoS characteristic parameter list.
(3) When a sensing request initiator is a core network, usage of sensing QoS is the same as that above, but the third-party sensing application server changes into the core network.
(4) When a sensing service initiator is a base station or a mobile terminal, the base station/mobile terminal may send an SQI/sensing QoS parameter set to the sensing network element, and the sensing network element forwards the SQI/sensing QoS parameter set to a corresponding sensing node. The base station/mobile terminal may also directly send the sensing request, and the sensing network element determines, based on the sensing request, a QoS parameter corresponding to a sensing service, and delivers the SQI/sensing QoS parameter set to a corresponding sensing node.

When the sensing signal is sent/received between the base station and the mobile terminal to sense environment information and generate a three-dimensional map, or when a sensing process requires cooperation of the mobile terminal, the sensing network element needs to deliver the SQI/sensing QoS parameter set (or the sensing QoS characteristic parameter including the foregoing parameter) to the mobile terminal by using the RAN side, to cooperate with the mobile terminal that performs the sensing service to determine corresponding sensing QoS parameter configuration information based on the SOI/sensing QoS parameter set (or the sensing QoS characteristic parameter including the foregoing parameter). The mobile terminal maps sensing data to a radio air interface resource at an SDAP layer based on an RRC reconfiguration (Reconfiguration) message of the base station.

Specific application case 2: The sensing network element sends a sensing QoS parameter to perform V2X sensing.

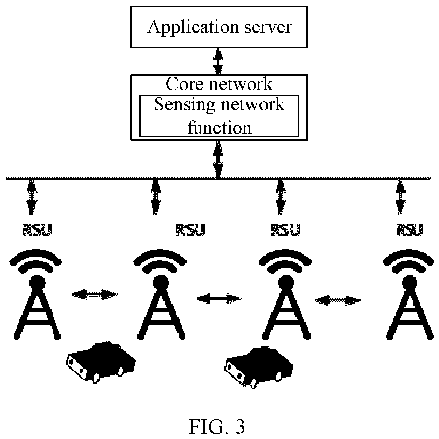

As shown in Figure 3, a sensing scenario of V2X is considered, that is, sensing of a vehicle user, pedestrian, and a vehicle. The vehicle user needs to sense pedestrian on a road and roadside near the vehicle user and a vehicle location and speed by using a sensing system of the vehicle user or a roadside unit (Road Side Unit, RSU). In this scenario, a requirement for a low delay and high reliability needs to be met. Therefore, delay tolerance is lower than that in three-dimensional map generation and weather detection, and a priority is higher than most sensing services. The vehicle user may be an ordinary user with no sensing system and performs sensing entirely by using the RSU; or the vehicle user may be equipment with an integrated communication and sensing system or a sensing system, and can exchange information with the RSU. The RSU is a roadside micro base station/micro base station, and has a sensing capability and a sensing resource.

When the vehicle user needs to perform pedestrian sensing by using the RSU, the vehicle user sends a sensing QoS characteristic parameter or a sensing service request (the sensing service request carries the SQI) to a nearby RSU. If the sensing QoS characteristic parameter is directly sent, and the sensing QoS characteristic parameter is standardized sensing QoS characteristic parameter and a sensing service, the vehicle user may directly send an SQI value to a nearest sensing node RSU. The nearest RSU forwards the SQI to the sensing network element, and the sensing network element may directly determine, based on the SQI value, a sensing service type, roadside RSUs that participate in sensing processing, a quantity of RSUs that participates in sensing processing, and a parameter configuration of each sensing node, so that it is convenient for the sensing node to schedule a sensing resource and an operation resource to perform sensing processing, and signaling overheads are reduced while complexity is improved. If the sensing QoS characteristic parameter is an operator-specific sensing QoS characteristic parameter, a specific QoS parameter set needs to be transmitted between network nodes. The sensing network element delivers the SQI or the sensing QoS parameter set to an RSU (mainly an RSU within a specific range of the vehicle user) that meets a sensing condition. The RSU determines a sensing manner based on the SQI or the sensing QoS parameter set, performs sensing parameter configuration, and schedules a time-frequency resource, a computing resource, and the like that meet a sensing requirement. After sensing calculation is completed, the RSU reports a sensing result to the sensing network element in real time, and the sensing network element delivers the sensing result to the vehicle user to provide a real-time sensing result. If the vehicle user sends only a sensing service request to the sensing network element, the sensing network element may also determine, based on the sensing service request, a sensing QoS characteristic parameter corresponding to the sensing service, and deliver the SQI or the sensing QoS parameter set to a corresponding sensing node RSU.

The foregoing usage of the SQI value or the sensing QoS parameter set is also applicable to a case that the vehicle user has a sensing capability. After a sensing request is initiated, the vehicle user performs sensing parameter configuration and sensing processing, and finally obtains a comprehensive sensing result with reference to the sensing result of the RSU.

The sensing request initiator may be alternatively a third-party application server, and the third-party sensing application server may send the sensing QoS characteristic parameter or the sensing service request to the sensing network element. The RSUs may directly determine the sensing service type and the sensing parameter configuration information of the sensing node based on the SQI, so that the sensing node schedules a sensing resource and an operation resource to perform sensing processing, and signaling overheads are reduced while flexibility is improved.

Specific application case 3: Mapping from sensing data in a concurrent sensing service to a DRB

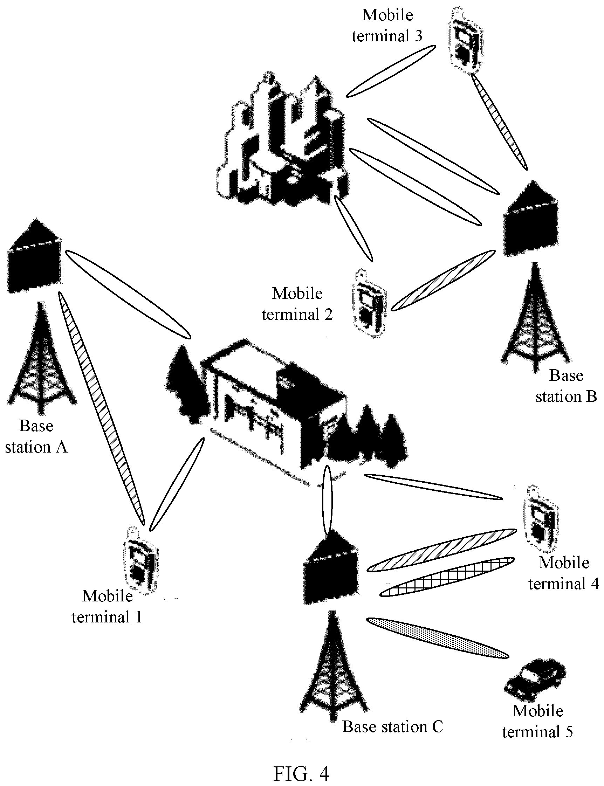

Two concurrent sensing services, that is, three-dimensional map reconstruction and weather detection in a specific region, are considered. A sensing signal needs to be sent and received between a base station and a mobile terminal to complete sensing. In addition, for a specific base station in a sensing region, another sensing service may also be concurrent, for example, precise positioning is performed on a location of a mobile user in a specific region, and real-time positioning (track sensing) is performed on a vehicle. An entire sensing scenario is shown in FIG. 4.

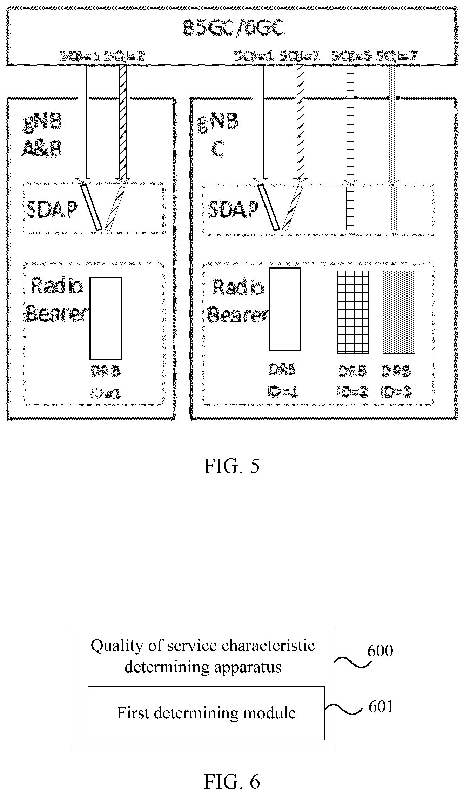

For three-dimensional map reconstruction and weather detection, generally, real-time requirements are not high, and service sensing duration is relatively long. The two types of sensing services may use a same sensing manner. For example, a large quantity of mobile terminals in a sensing region in which the base station is located cooperate with a base station to send a sensing signal in an uplink, and the base station performs a sensing operation to obtain environment information. In this case, the base station may configure a proper radio bearer parameter and a transmission resource configuration parameter for the service based on two similar sensing QoS types, and transmit sensing signal data of the two services on a same logical channel, that is, implement multi-to-one mapping from sensing signal data to a radio bearer. In addition, for some base stations in the region, other sensing services may also be concurrent. As shown in FIG. 4, a base station C further needs to perform positioning sensing of a mobile terminal 4 (pedestrian) and real-time track sensing of a mobile terminal 5 (a vehicle on the road). Because real-time requirements and sensing action distances of the two services are different from the foregoing three-dimensional map reconstruction and weather sensing services, the base station needs to separately invoke transmission resources of different levels to carry the two services. As shown in FIG. 5, for a base station A and a base station B, mapping from the two types of sensing data of three-dimensional map reconstruction (SQI=1) and whether sensing (SQI=2) to a DRB is multiple-to-one (mapped to DRB ID=1), and mapping from pedestrian positioning sensing (SQI=5) and real-time vehicle track sensing (SQI=7) data to a DRB is one-to-one (mapped to DRB ID=2 and DRBID=3 respectively).

It should be noted that, currently, because there are relatively many types of sensing services, a sensing manner and a sensing measurement amount are also different based on different types of sensing services, a case that network sensing efficiency is low and signaling overheads related to sensing are huge. In this application, a specific mapping relationship between a sensing requirement and sensing processing is determined by classifying and quantizing a sensing requirement, a sensing service, and QoS of different sensing services, so that sensing processing (including a transmit end configures a sensing signal format and a parameter, and a receive end determines processing precision and a sensing computing resource) of each sensing node can meet a sensing QoS requirement, and finally, a network sensing function is more efficient and more flexible.

It should be noted that, in the quality of service characteristic parameter determining provided in the embodiments of this application may be performed by a quality of service characteristic parameter determining apparatus, or a control module that is in the quality of service characteristic parameter determining apparatus and that is configured to perform the quality of service characteristic parameter determining method. In this embodiment of this application, that the quality of service characteristic parameter determining apparatus performs the quality of service characteristic parameter determining method is used as an example to describe the quality of service characteristic parameter determining apparatus provided in the embodiments of this application.

As shown in FIG. 6, an embodiment of this application provides a quality of service characteristic parameter determining apparatus 600, which is applied to a sending device and includes:
a first determining module 601, configured to determine a sensing quality of service QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, the first determining module 601 includes:
a first obtaining unit, configured to obtain a QoS parameter set, where the QoS parameter set is a correspondence between a value of a sensing quality identity SQI and a value of the sensing QoS characteristic parameter;
a first receiving unit, configured to receive a sensing quality identity SQI notified by a core network device or a receiving device; and
a first determining unit, configured to determine the sensing QoS characteristic parameter based on the SQI and the QoS parameter set.

Optionally, the QoS parameter set is agreed upon in a protocol or notified by the core network device.

Optionally, the first determining module 601 includes:
a second receiving unit, configured to receive first information sent by a core network device or a receiving device, where
the first information is used to indicate the sensing QoS characteristic parameter.

Optionally, after the first determining module 601 determines the sensing quality of service QoS characteristic parameter, the apparatus further includes:
a second determining module, configured to determine sensing parameter configuration information based on the sensing QoS characteristic parameter; and
a second sending module, configured to send a sensing signal to a receiving device based on the sensing parameter configuration information; where
the sensing parameter configuration information includes at least one of the following:
   bandwidth of the sensing signal, a quantity of transmit antennas of the sensing signal, transmit power of the sensing signal, a period of the sensing signal, and a quantity of pulses of the sensing signal.

Optionally, the second sensing module includes:
a first mapping unit, configured to map the sensing signal to a radio bearer RB by using a target mapping rule; and
a first sending unit, configured to send the sensing signal to the receiving device by using the RB; where
the target mapping rule includes at least one of the following:
   a plurality of sensing signals are mapped to a same RB; and
   one sensing signal is mapped to one RB.

Optionally, after the first determining module 601 determines the sensing quality of service QoS characteristic parameter, the apparatus further includes:
a third determining module, configured to determine a measurement amount of a sensing signal based on the sensing QoS characteristic parameter; and
a third sending module, configured to send the measurement amount to a receiving device.

Optionally, the apparatus further includes at least one of the following:
a first receiving module, configured to receive a sensing manner of a sensing service that is sent by a core network device or a receiving device; and
a fourth determining module, configured to determine the sensing manner of the sensing service based on the sensing QoS characteristic parameter; where
different sensing manners indicate different transmit and receive ends of sensing signals.

Optionally, the apparatus further includes at least one of the following:
a second receiving module, configured to receive a sending device and a receiving device that participate in sensing and that are sent by a core network device or a receiving device; and
a fifth determining module, configured to determine, based on the sensing QoS characteristic parameter, the sending device and the receiving device that participate in sensing.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

It should be noted that the apparatus embodiment is an apparatus corresponding to the foregoing method. All implementations in the foregoing method embodiment are applicable to the apparatus embodiment, and a same technical effect can also be achieved. Details are not described herein again.

The quality of service characteristic parameter determining apparatus provided in this embodiment of this application can implement the processes implemented in the method embodiment shown in FIG. 1, and a same technical effect is achieved. To avoid repetition, details are not provided herein again.

Preferably, an embodiment of this application further provides a sensing device, including a processor, a memory, and a program or an instruction that is stored in the memory and that can be run on the processor. When the program or the instruction is executed by the processor, the processes of the embodiment of the quality of service characteristic parameter determining method applied to a sending device side are implemented, and a same technical effect can be achieved. To avoid repetition, details are not described herein again.

An embodiment of this application further provides a readable storage medium. The readable storage medium stores a program or an instruction, and when the program or the instruction is executed by a processor, the processes of the embodiment of the quality of service characteristic parameter determining method applied to a sending device side are implemented, and a same technical effect can be achieved. To avoid repetition, details are not described herein again.

The computer-readable storage medium is, for example, a read-only memory (Read-Only Memory, ROM for short), a random access memory (Random Access Memory, RAM for short), a magnetic disk, or an optical disc.

An embodiment of this application further provides a sending device, including a processor and a communication interface. The processor is configured to determine a sensing quality of service QoS characteristic parameter, where
the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

This device embodiment is corresponding to the foregoing embodiment for the quality of service characteristic parameter determining method. Each implementation process and implementation of the foregoing method embodiment may be applicable to this device embodiment, and a same technical effect can be achieved.

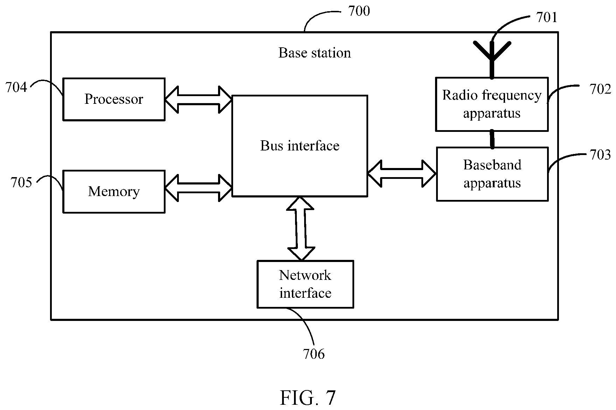

Specifically, an embodiment of this application further provides a sensing device. When the sending device is a base station, as shown in FIG. 7, a base station 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes information that needs to be sent, and sends processed information to the radio frequency apparatus 702. The radio frequency apparatus 702 processes the received information, and sends processed information by using the antenna 701.

The foregoing band processing apparatus may be located in the baseband apparatus 703, and a method performed by the base station in the foregoing embodiment may be implemented in the baseband apparatus 703. The baseband apparatus 703 includes a processor 704 and a memory 705.

The baseband apparatus 703 may include, for example, at least one baseband board, and a plurality of chips are disposed on the baseband board. As shown in FIG. 7, one chip is, for example, the processor 704, and is connected to the memory 705, to invoke a program in the memory 705 to perform operations of a network device shown in the foregoing method embodiment.

The baseband apparatus 703 may further include a network interface 706, configured to exchange information with the radio frequency apparatus 702. For example, the interface is a common public radio interface (common public radio interface, CPRI for short).

Specifically, the base station in this embodiment of the present invention further includes an instruction or a program that is stored in the memory 705 and that can be run on the processor 704, and the processor 704 invokes the instruction or the program in the memory 705 to perform the method performed by the modules shown in FIG. 6, and a same technical effect is achieved. To avoid repetition, details are not described herein again.

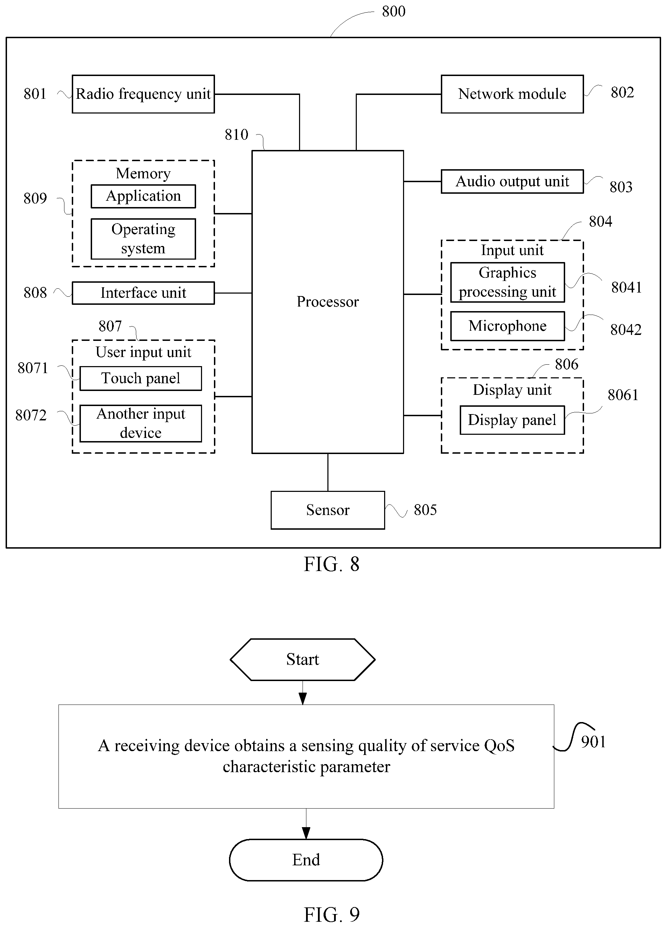

When the sending device is a terminal, FIG. 8 is a schematic diagram of a hardware structure of a terminal.

A terminal 800 includes but is not limited to some components in a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, an application or an instruction required by at least one function (for example, a sound playing function or an image playing function), and the like. In addition, the memory 809 may include a high-speed random access memory, or may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It may be understood that, alternatively, the modem processor may not be integrated into the processor 810.

The processor 810 is configured to:
determining a sensing quality of service QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, the processor 810 is configured to implement:
obtaining a QoS parameter set, where the QoS parameter set is a correspondence between a value of a sensing quality identity SQI and a value of the sensing QoS characteristic parameter.

The radio frequency unit 801 is configured to receive a sensing quality identity SQI notified by a core network device or a receiving device.

The processor 810 is configured to determine the sensing QoS characteristic parameter based on the SQI and the QoS parameter set.

Optionally, the QoS parameter set is agreed upon in a protocol or notified by the core network device.

Optionally, the radio frequency unit 801 is configured to:
receive first information sent by a core network device or a receiving device, where
the first information is used to indicate the sensing QoS characteristic parameter.

Optionally, the processor 810 is further configured to:
determine, by the sending device, sensing parameter configuration information based on the sensing QoS characteristic parameter.

The radio frequency unit 801 is configured to send a sensing signal to a receiving device based on the sensing parameter configuration information, where
the sensing parameter configuration information includes at least one of the following:
bandwidth of the sensing signal, a quantity of transmit antennas of the sensing signal, transmit power of the sensing signal, a period of the sensing signal, and a quantity of pulses of the sensing signal.

Optionally, the processor 810 is further configured to map the sensing signal to a radio bearer RB by using a target mapping rule.

The radio frequency unit 801 is configured to send the sensing signal to the receiving device by using the RB, where
the target mapping rule includes at least one of the following:
a plurality of sensing signals are mapped to a same RB; and
one sensing signal is mapped to one RB.

Optionally, the processor 810 is further configured to determine a measurement amount of a sensing signal based on the sensing QoS characteristic parameter.

The radio frequency unit 801 is configured to send the measurement amount to a receiving device.

Optionally, the radio frequency unit 801 is further configured to receive a sensing manner of a sensing service that is sent by a core network device or a receiving device; or
the processor 810 is further configured to determine the sensing manner of the sensing service based on the sensing QoS characteristic parameter; where
different sensing manners indicate different transmit and receive ends of sensing signals.

Optionally, the radio frequency unit 801 is further configured to:
receive a sending device and a receiving device that participate in sensing and that are sent by a core network device or a receiving device.

The processor 810 is further configured to determine, based on the sensing QoS characteristic parameter, the sending device and the receiving device that participate in sensing.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

It should be noted that, in this embodiment of this application, the quality of service QoS parameter is determined, so that the sensing signal can be accurately sent, thereby improving sensing accuracy and sensing efficiency.

As shown in FIG. 9, an embodiment of this application further provides a quality of service characteristic parameter determining method, including:
Step 901: A receiving device obtains a sensing QoS characteristic parameter.

The sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, that the receiving device obtains the sensing QoS characteristic parameter includes:
obtaining a QoS parameter set, where the QoS parameter set is a correspondence between a value of a sensing quality identity SQI and a value of the sensing QoS characteristic parameter;
receiving, by the receiving device, a sensing quality identity SQI notified by a core network device or a sending device; and
determining the sensing QoS characteristic parameter based on the SQI and the QoS parameter set.

Optionally, the QoS parameter set is agreed upon in a protocol or notified by the core network device or the sending device.

Optionally, that the receiving device obtains the sensing QoS characteristic parameter includes:
receiving second information sent by a core network device or a sending device, where
the second information indicates the sensing QoS characteristic parameter.

Optionally, the method further includes:
obtaining, by the receiving device, sensing parameter configuration information; and
receiving, by the receiving device based on the sensing parameter configuration information, a sensing signal sent by a sending device; where
the sensing parameter configuration information includes at least one of the following:
   bandwidth of the sensing signal, a quantity of transmit antennas of the sensing signal, transmit power of the sensing signal, a period of the sensing signal, and a quantity of pulses of the sensing signal.

Optionally, the obtaining, by the receiving device, sensing parameter configuration information includes:
receiving, by the receiving device, the sensing parameter configuration information sent by the sending device or a core network device.

Optionally, the obtaining, by the receiving device, sensing parameter configuration information includes:
determining, by the receiving device, the sensing parameter configuration information based on the sensing QoS characteristic parameter.

Optionally, the receiving a sensing signal sent by a sending device includes:
determining a target mapping rule between a sensing signal and a radio bearer RB; and
receiving, by using the RB according to the target mapping rule, the sensing signal sent by the sending device; where
the target mapping rule includes at least one of the following:
   a plurality of sensing signals are mapped to a same RB; and
   one sensing signal is mapped to one RB.

Optionally, the method further includes:
obtaining, by the receiving device, a measurement amount of the sensing signal; and
measuring, by the receiving device, the sensing signal based on the measurement amount of the sensing signal, to determine a measurement value corresponding to the measurement amount.

Optionally, the obtaining, by the receiving device, a measurement amount of the sensing signal includes one of the following:
receiving, by the receiving device, a measurement amount of a sensing signal that is sent by the sending device; and
determining, by the receiving device, the measurement amount of the sensing signal based on the sensing QoS characteristic parameter.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

It should be noted that all descriptions of the receiving device in the foregoing embodiments are applicable to the embodiment of the quality of service characteristic parameter determining method, and a same technical effect can be achieved. Details are not described herein again.

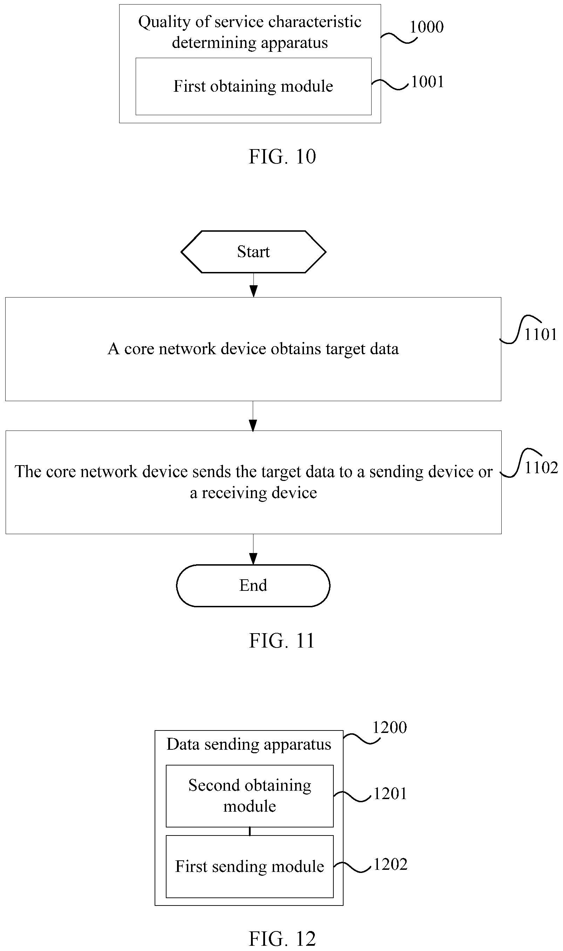

As shown in FIG. 10, an embodiment of this application further provides a quality of service characteristic parameter determining apparatus 1000, which is applied to a receiving device and includes:
a first obtaining module 1001, configured to acquire a sensing QoS characteristic parameter, where
the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, the first obtaining module 1001 includes:
a second obtaining unit, configured to obtain a QoS parameter set, where the QoS parameter set is a correspondence between a value of a sensing quality identity SQI and a value of the sensing QoS characteristic parameter;
a third receiving unit, configured to receive a sensing quality identity SQI notified by a core network device or a sending device; and
a second determining unit, configured to determine the sensing QoS characteristic parameter based on the SQI and the QoS parameter set.

Optionally, the QoS parameter set is agreed upon in a protocol or notified by the core network device or the sending device.

Optionally, the first obtaining module 1001 includes:
a fourth receiving unit, configured to receive second information sent by a core network device or a sending device, where
the second information indicates the sensing QoS characteristic parameter.

Optionally, the method further includes:
a third obtaining module, configured to obtain sensing parameter configuration information; and
a third receiving module, configured to receive, based on the sensing parameter configuration information, a sensing signal sent by a sending device; where
the sensing parameter configuration information includes at least one of the following:
   bandwidth of the sensing signal, a quantity of transmit antennas of the sensing signal, transmit power of the sensing signal, a period of the sensing signal, and a quantity of pulses of the sensing signal.

Optionally, the third obtaining module includes:
a fifth receiving unit, configured to receive the sensing parameter configuration information sent by the sending device or a core network device.

Optionally, the third obtaining module includes:
a third determining unit, configured to determine the sensing parameter configuration information based on the sensing QoS characteristic parameter.

Optionally, the third receiving module includes:
a fourth determining unit, configured to determine a target mapping rule between a sensing signal and a radio bearer RB; and
a sixth receiving unit, configured to receive, by using the RB according to the target mapping rule, the sensing signal sent by the sending device; where
the target mapping rule includes at least one of the following:
   a plurality of sensing signals are mapped to a same RB; and
   one sensing signal is mapped to one RB.

Optionally, the method further includes:
a fourth obtaining module, configured to obtain a measurement amount of the sensing signal; and
a sixth determining module, configured to measure the sensing signal based on the measurement amount of the sensing signal, to determine a measurement value corresponding to the measurement amount.

Optionally, the fourth obtaining module includes one of the following:
a seventh receiving unit, configured to receive a measurement amount of a sensing signal that is sent by the sending device; and
a fifth determining unit, configured to determine the measurement amount of the sensing signal based on the sensing QoS characteristic parameter.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

Preferably, an embodiment of this application further provides a receive device, including a processor, a memory, and a program or an instruction that is stored in the memory and that can be run on the processor. When the program or the instruction is executed by the processor, the processes of the embodiment of the quality of service characteristic parameter determining method that is applied to a receive device side are implemented, and a same technical effect can be achieved. To avoid repetition, details are not described herein again.

An embodiment of this application further provides a readable storage medium. The readable storage medium stores a program or an instruction, and when the program or the instruction is executed by a processor, the processes of the embodiment of the quality of service characteristic parameter determining method that is applied to a receive device side are implemented, and a same technical effect can be achieved. To avoid repetition, details are not described herein again.

The computer-readable storage medium is, for example, a read-only memory (Read-Only Memory, ROM for short), a random access memory (Random Access Memory, RAM for short), a magnetic disk, or an optical disc.

An embodiment of this application further provides a receiving device, including a processor and a communication interface. The processor is configured to obtain a sensing QoS characteristic parameter, where
the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

This device embodiment is corresponding to the foregoing method embodiment applied to the receiving device side. Each implementation process and implementation of the foregoing method embodiment may be applicable to this device embodiment, and a same technical effect can be achieved.

Specifically, an embodiment of this application further provides a receiving device. Specifically, for a structure of the receiving device, reference may be made to the structure in FIG. 7 or FIG. 8. Details are not described herein again.

Specifically, the processor invokes an instruction or a program in the memory to perform the method performed by the modules shown in FIG. 10, and a same technical effect is achieved. To avoid repetition, details are not described herein again.

As shown in FIG. 11, an embodiment of this application provides a data sending method, including:
Step 1101: A core network device obtains target data, where the target data includes a sensing QoS characteristic parameter or a sensing quality identity SQI.
Step 1102: The core network device sends the target data to a sending device or a receiving device, where the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, the method further includes:
determining third information based on the target data; where
the third information includes at least one of the following:
   a sensing manner of a sensing service, where different sensing manners indicate different transmit and receive ends of sensing signals; and
   a sending device and a receiving device that participate in sensing.

Optionally, after the determining third information based on the target data the method further includes:
sending, by the core network device to the sending device or the receiving device, the sensing manner of the sensing service and/or the sending device and the receiving device that participate in sensing.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

It should be noted that all descriptions of the core network device in the foregoing embodiments are applicable to the embodiment of the data sending method, and a same technical effect can be achieved. Details are not described herein again.

As shown in FIG. 12, an embodiment of this application further provides a data sending apparatus 1200, which is applied to a core network device and includes:
a second obtaining module 1201, configured to obtain target data, where the target data includes a sensing QoS characteristic parameter or a sensing quality identity SQI; and
a first sending module 1202, configured to send the target data to a sending device or a receiving device, where the sensing QoS characteristic parameter includes at least one of the following:
   a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

Optionally, the apparatus further includes:
a seventh determining module, configured to determine third information based on the target data; where
the third information includes at least one of the following:
   a sensing manner of a sensing service, where different sensing manners indicate different transmit and receive ends of sensing signals; and
   a sending device and a receiving device that participate in sensing.

Optionally, after the seventh determining module determines the third information based on the target data, the apparatus further includes:
a fourth sending module, configured to send, to the sending device or the receiving device, the sensing manner of the sensing service and/or the sending device and the receiving device that participate in sensing.

Optionally, the sensing priority level is used to determine a resource scheduling priority of a sensing signal.

Optionally, the sensing service type includes at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

It should be noted that all descriptions of the core network device in the foregoing embodiments are applicable to the embodiment of the data sending method, and a same technical effect can be achieved. Details are not described herein again.

Optionally, an embodiment of this application further provides a core network device, including a processor, a memory, and a program or an instruction that is stored in the memory and that can be run on the processor. When the program or the instruction is executed by the processor, the processes of the method of the data sending method that is applied to a core network device side are implemented, and a same technical effect is achieved. To avoid repetition, details are not described herein again.

An embodiment of this application further provides a readable storage medium. The readable storage medium stores a program or an instruction, and when the program or the instruction is executed by a processor, the processes of the method of the data sending method that is applied to a core network device side are implemented, and a same technical effect can be achieved. To avoid repetition, details are not described herein again.

The computer-readable storage medium is, for example, a read-only memory (Read-Only Memory, ROM for short), a random access memory (Random Access Memory, RAM for short), a magnetic disk, or an optical disc.

An embodiment of this application further provides a core network device, including a processor and a communication interface. The processor is configured to obtain target data, where the target data includes a sensing QoS characteristic parameter or a sensing quality identity SQI. The communication interface is configured to send the target data to a sending device or a receiving device, where the sensing QoS characteristic parameter includes at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

This device embodiment is corresponding to the foregoing method embodiment applied to a core network device side. Each implementation process and implementation of the foregoing method embodiment may be applicable to this core network device embodiment, and a same technical effect can be achieved.

Specifically, an embodiment of this application further provides a core network device. Specifically, for a structure of a first core network device, reference may be made to a structure of a base station in FIG. 7. Details are not described herein again.

Specifically, the processor invokes an instruction or a program in the memory to perform the method performed by the modules shown in FIG. 12, and a same technical effect is achieved. To avoid repetition, details are not described herein again.

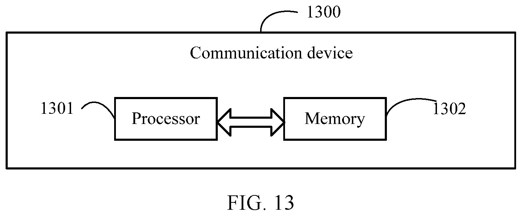

Optionally, as shown in FIG. 13, an embodiment of this application further provides a communication device 1300, including a processor 1301, a memory 1302, and a program or an instruction that is stored in the memory 1302 and that can be run on the processor 1301. For example, when the communication device 1300 is a sending device, the program or the instruction is executed by the processor 1301 to implement the processes of the embodiment of the quality of service characteristic parameter determining method, and a same technical effect can be achieved. When the communication device 1300 is a receiving device, the program or the instruction is executed by the processor 1301 to implement the processes of the embodiment of the quality of service characteristic parameter determining method, and a same technical effect can be achieved. When the communication device 1300 is a core network device, the program or the instruction is executed by the processor 1301 to implement the processes of the embodiment of the quality of service characteristic parameter determining method, and a same technical effect can be achieved. To avoid repetition, details are not described herein again.

The sending device and the receiving device involved in the embodiments of this application may be terminals, and the terminal may be a device that provides voice and/or other service data connectivity for a user, a handheld device with a wireless connection function, or another processing device connected to a wireless modem. In different systems, names of terminal devices may also be different. For example, in a 5G system, the terminal device may be referred to as user equipment (User Equipment, UE). A wireless terminal may communicate with one or more core networks (Core Network, CN) through a radio access network (Radio Access Network, RAN), and the wireless terminal may be a mobile terminal, such as a mobile telephone (or referred to as a "cellular" phone) and a computer with a mobile terminal. For example, the wireless terminal may a portable mobile apparatus, a pocket mobile apparatus, a handheld mobile apparatus, a computer built-in mobile apparatus or a vehicle-mounted mobile apparatus, which exchanges language and/or data with a radio access network, for example, a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal device may also be referred to as a system, a subscriber unit (subscriber unit), a subscriber station (subscriber station), a mobile station (mobile station), a mobile station (mobile), a remote station (remote station), an access point (access point), a remote terminal device (remote terminal), an access terminal device (access terminal), a user terminal device (user terminal), a user agent (user agent), and a user apparatus (user device). This is not limited in the embodiments of this application.

The sending device and the receiving device involved in the embodiments of this application may be base transceiver stations (Base Transceiver Station, BTS) in a global system for mobile communication (Global System of Mobile communication, GSM) or code division multiple access (Code Division Multiple Access, CDMA), or may be NodeBs (NodeB, NB) in wideband code division multiple access (Wideband Code Division Multiple Access, WCDMA), or may be evolved NodeBs (Evolutional NodeB, eNB or eNodeB), relay stations, or access points in LTE, or base stations in a future 5G network, or the like. This is not limited herein.

Multi Input Multi Output (Multi Input Multi Output, MIMO) transmission may be separately performed between the sending device and the receiving device by using one or more antennas, and the MIMO transmission may be single-user MIMO (Single User MIMO, SU-MIMO) or multi-user MIMO (Multiple User MIMO, MU-MIMO). According to a form and a quantity of root antenna combinations, MIMO transmission may be two-dimensional MIMO (2 Dimension MIMO, 2D-MIMO), three-dimensional MIMO (3 Dimension MIMO, 3D-MIMO), full-dimensional MIMO (Full Dimension MIMO, FD-MIMO), large-scale MIMO (massive-MIMO), diversity transmission, precoding transmission, beamforming transmission, or the like.

An embodiment of this application further provides a chip. The chip includes a processor and a communication interface, the communication interface is coupled to the processor, and the processor is configured to run a program or an instruction to implement the processes of the embodiment of the quality of service characteristic parameter determining method or the data sending method, and a same technical effect can be achieved. To avoid repetition, details are not described herein again.

It should be understood that the chip mentioned in the embodiments of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A quality of service characteristic parameter determining method, comprising:
determining, by a sending device, a sensing quality of service QoS characteristic parameter, wherein
the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

2. The method according to claim 1, wherein the determining, by a sending device, a sensing quality of service QoS characteristic parameter comprises:
obtaining, by the sending device, a QoS parameter set, wherein the QoS parameter set is a correspondence between a value of a sensing quality identity SQI and a value of the sensing QoS characteristic parameter;
receiving, by the sending device, an SQI notified by a core network device or a receiving device; and
determining the sensing QoS characteristic parameter based on the SQI and the QoS parameter set.

3. The method according to claim 2, wherein the QoS parameter set is agreed upon in a protocol or notified by the core network device.

4. The method according to claim 1, wherein the determining, by a sending device, a sensing quality of service QoS characteristic parameter comprises:
receiving, by a sending device, first information sent by a core network device or a receiving device, wherein
the first information is used to indicate the sensing QoS characteristic parameter.

5. The method according to claim 1, after the determining, by a sending device, a sensing quality of service QoS characteristic parameter, further comprising:
determining, by the sending device, sensing parameter configuration information based on the sensing QoS characteristic parameter; and
sending, by the sending device, a sensing signal to a receiving device based on the sensing parameter configuration information; wherein
the sensing parameter configuration information comprises at least one of the following:
bandwidth of the sensing signal, a quantity of transmit antennas of the sensing signal, transmit power of the sensing signal, a period of the sensing signal, and a quantity of pulses of the sensing signal.

6. The method according to claim 5, wherein the sending, by the sending device, a sensing signal to a receiving device based on the sensing parameter configuration information comprises:
mapping, by the sending device, the sensing signal to a radio bearer RB by using a target mapping rule; and
sending the sensing signal to the receiving device by using the RB; wherein
the target mapping rule comprises at least one of the following:
a plurality of sensing signals are mapped to a same RB; and
one sensing signal is mapped to one RB.

7. The method according to claim 1, after the determining, by a sending device, a sensing quality of service QoS characteristic parameter, further comprising:
determining, by the sending device, a measurement amount of a sensing signal based on the sensing QoS characteristic parameter; and
sending, by the sending device, the measurement amount to a receiving device.

8. The method according to claim 1, further comprising at least one of the following:
receiving, by the sending device, a sensing manner of a sensing service that is sent by a core network device or a receiving device; and
determining, by the sending device, the sensing manner of the sensing service based on the sensing QoS characteristic parameter; wherein
different sensing manners indicate different transmit and receive ends of sensing signals.

9. The method according to claim 1, further comprising at least one of the following:
receiving, by the sending device, a sending device and a receiving device that participate in sensing and that are sent by a core network device or a receiving device; and
determining, by the sending device based on the sensing QoS characteristic parameter, the sending device and the receiving device that participate in sensing.

10. The method according to claim 1, wherein the sensing priority level is used to determine a resource scheduling priority of a sensing signal.

11. The method according to claim 1, wherein the sensing service type comprises at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

12. A quality of service characteristic parameter determining method, comprising:
obtaining, by a receiving device, a sensing quality of service QoS characteristic parameter, wherein
the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

13. The method according to claim 12, wherein the obtaining, by a receiving device, a sensing quality of service QoS characteristic parameter comprises:
obtaining a QoS parameter set, wherein the QoS parameter set is a correspondence between a value of a sensing quality identity SQI and a value of the sensing QoS characteristic parameter;
receiving, by the receiving device, an SQI notified by a core network device or a sending device; and
determining the sensing QoS characteristic parameter based on the SQI and the QoS parameter set.

14. The method according to claim 13, wherein the QoS parameter set is agreed upon in a protocol or notified by the core network device or the sending device.

15. The method according to claim 12, wherein the obtaining, by a receiving device, a sensing QoS characteristic parameter comprises:
receiving second information sent by a core network device or a sending device, wherein
the second information indicates the sensing QoS characteristic parameter.

16. The method according to claim 12, further comprising:
obtaining, by the receiving device, sensing parameter configuration information; and
receiving, by the receiving device based on the sensing parameter configuration information, a sensing signal sent by a sending device; wherein
the sensing parameter configuration information comprises at least one of the following:
bandwidth of the sensing signal, a quantity of transmit antennas of the sensing signal, transmit power of the sensing signal, a period of the sensing signal, and a quantity of pulses of the sensing signal.

17. The method according to claim 16, wherein the obtaining, by the receiving device, sensing parameter configuration information comprises:
receiving, by the receiving device, the sensing parameter configuration information sent by the sending device or a core network device.

18. The method according to claim 16, wherein the obtaining, by the receiving device, sensing parameter configuration information comprises:
determining, by the receiving device, the sensing parameter configuration information based on the sensing QoS characteristic parameter.

19. The method according to claim 16, wherein the receiving a sensing signal sent by a sending device comprises:
determining a target mapping rule between a sensing signal and a radio bearer RB; and
receiving, by using the RB according to the target mapping rule, the sensing signal sent by the sending device; wherein
the target mapping rule comprises at least one of the following:
a plurality of sensing signals are mapped to a same RB; and
one sensing signal is mapped to one RB.

20. The method according to claim 16, further comprising:
obtaining, by the receiving device, a measurement amount of the sensing signal; and
measuring, by the receiving device, the sensing signal based on the measurement amount of the sensing signal, to determine a measurement value corresponding to the measurement amount.

21. The method according to claim 20, wherein the obtaining, by the receiving device, a measurement amount of the sensing signal comprises one of the following:
receiving, by the receiving device, a measurement amount of a sensing signal that is sent by the sending device; and
determining, by the receiving device, the measurement amount of the sensing signal based on the sensing QoS characteristic parameter.

22. The method according to claim 12, wherein the sensing priority level is used to determine a resource scheduling priority of a sensing signal.

23. The method according to claim 12, wherein the sensing service type comprises at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

24. A data sending method, comprising:
obtaining, by a core network device, target data, wherein the target data comprises a sensing QoS characteristic parameter or a sensing quality identity SQI; and
sending, by the core network device, the target data to a sending device or a receiving device, wherein the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

25. The method according to claim 24, further comprising:
determining third information based on the target data; wherein
the third information comprises at least one of the following:
a sensing manner of a sensing service, wherein different sensing manners indicate different transmit and receive ends of sensing signals; and
a sending device and a receiving device that participate in sensing.

26. The method according to claim 25, after the determining third information based on the target data, further comprising:
sending, by the core network device to the sending device or the receiving device, the sensing manner of the sensing service and/or the sending device and the receiving device that participate in sensing.

27. The method according to claim 24, wherein the sensing priority level is used to determine a resource scheduling priority of a sensing signal.

28. The method according to claim 24, wherein the sensing service type comprises at least one of the following:
a delay-critical sensing service whose physical sensing range is greater than or equal to a preset value;
a sensing service whose physical sensing range is greater than or equal to a preset value;
a delay-critical sensing service whose physical sensing range is less than a preset value; and
a sensing service whose physical sensing range is less than a preset value.

29. A quality of service characteristic parameter determining apparatus, applied to a sending device, and comprising:
a first determining module, configured to determine a sensing quality of service QoS characteristic parameter, wherein
the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

30. A sending device, comprising a processor, a memory, and a program or an instruction that is stored in the memory and that can be run on the processor, wherein when the program or the instruction is executed by the processor, the steps of the quality of service characteristic parameter determining method according to any one of claims 1 to 11 are implemented.

31. A quality of service characteristic parameter determining apparatus, applied to a receiving device, and comprising:
a first obtaining module, configured to obtain a sensing QoS characteristic parameter, wherein
the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

32. A first device, comprising a processor, a memory, and a program or an instruction that is stored in the memory and that can be run on the processor, wherein when the program or the instruction is executed by the processor, the steps of the quality of service characteristic parameter determining method according to any one of claims 12 to 23 are implemented.

33. A data sending apparatus, applied to a core network device, and comprising:
a second obtaining module, configured to obtain target data, wherein the target data comprises a sensing QoS characteristic parameter or a sensing quality identity SQI; and
a first sending module, configured to send the target data to a sending device or a receiving device, wherein the sensing QoS characteristic parameter comprises at least one of the following:
a sensing service type, a sensing priority level, a sensing delay budget, sensing resolution, a maximum sensing range, a sensing error, a continuous sensing capacity, a sensing update rate, sensing signal quality, sensing security, sensing privacy, a detection probability, and a false alarm probability.

34. A core network device, comprising a processor, a memory, and a program or an instruction that is stored in the memory and that can be run on the processor, wherein when the program or the instruction is executed by the processor, the steps of the data sending method according to any one of claims 24 to 28 are implemented.

35. A readable storage medium, wherein the readable storage medium stores a program or an instruction, and when the program or the instruction is executed by a processor, the steps of the quality of service characteristic parameter determining method according to any one of claims 1 to 23 are implemented, or the steps of the data sending method according to any one of claims 24 to 28 are implemented.

36. A chip, comprising a processor and a communication interface, wherein the communication interface is coupled to the processor, and the processor is configured to run a program or an instruction to implement the steps of the quality of service characteristic parameter determining method according to any one of claims 1 to 23, or the steps of the data sending method according to any one of claims 24 to 28.

37. A computer program product, wherein the program product is stored in a non-volatile storage medium, and the program product is executed by at least one processor to implement the steps of the quality of service characteristic parameter determining method according to any one of claims 1 to 23, or the steps of the data sending method according to any one of claims 24 to 28.

38. A communication device, configured to implement the steps of the quality of service characteristic parameter determining method according to any one of claims 1 to 23 or the steps of the data sending method according to any one of claims 24 to 28.
